# EUROPEAN PATENT APPLICATION

(11) **EP 3 392 925 A1**
(43) Date of publication of application: **24.10.2018**
(21) Application number: 18168065.3
(22) Date of filing: 18.04.2018
(51) Int. Cl.: H01M 2/02, B29D 11/00, H01M 2/10, H01M 2/36, H01M 10/04, H01M 4/24, H01M 10/28, H01M 4/50

(54) **FLEXIBLE MICRO-BATTERY**

(30) Priority: 19.04.2017 US 201762487272 P; 29.01.2018 US 201815882158
(71) Applicant: Johnson & Johnson Vision Care, Inc., Jacksonville, FL 32256 (US)
(72) Inventor: AUDEBERT, Jean-Francois, Falls Church, Virginia 22042 (US); FLITSCH, Frederick A., New Windsor, New York 12553 (US); KANNER, Zachary, Framingham, Massachusetts 01701 (US); MUTHU, Millburn Ebenezer, Jacksonville, Florida 32256 (US); PAGLIARO, Leonard, Bowie, Maryland (US); PUGH, Randall B., Jacksonville, Florida 32256 (US); WEINSTEIN, Lawrence Edward, Silver Spring, Maryland (US); PETERSON, Serena, College Park, Maryland 20740 (US); HOWARTH, Jonathan, Baltimore, Maryland (US)
(74) Representative: Tunstall, Christopher Stephen

(57) **Abstract**

Designs, strategies and methods for forming micro-batteries are described. In some examples, ultrasonic welded seals may be used to seal battery chemistry within the micro-battery. In some further examples, the micro-battery is encapsulated by a copper film where at least a portion of the copper film is formed by electroless plating.

## Description

### CROSS REFERENCE TO RELATED APPLICATIONS

This patent application claims the benefit of United States Provisional Pate4nt Application No. 62/487,272 filed April 19, 2017 and is a continuation in part of United States Patent Application 15/326,161, filed January 13, 2017, which in turn claims the benefit of United States Provisional Application No. 62/016,851 filed July 21, 2014. The contents of each are herein incorporated by reference.

### BACKGROUND OF THE INVENTION

### Field of the Invention

The present invention generally relates to an electrochemical battery, and more particularly to a biocompatible micro-electrochemical cell.

### Description of the Related Art

Recently, the number of medical devices and their functionality has begun to rapidly develop. These medical devices may include, for example, implantable pacemakers, electronic pills for monitoring and/or testing a biological function, surgical devices with active components, contact lenses, infusion pumps, and neurostimulators. Added functionality and an increase in performance to many of the aforementioned medical devices have been theorized and developed. However, to achieve the theorized added functionality, many of these devices now require self-contained energization means that are compatible with the size and shape requirements of these devices, as well as the energy requirements of the new energized components.

Some medical devices may include electrical components such as semiconductor devices that perform a variety of functions and may be incorporated into many biocompatible and/or implantable devices. However, such semiconductor components require energy, and thus energization elements may preferably also be included in such biocompatible devices. The topology and relatively small size of the biocompatible devices may create challenging environments for the definition of various functionalities. In many examples, it may be important to provide safe, reliable, compact and cost-effective means to energize the semiconductor components within the biocompatible devices. Therefore, a need exists for biocompatible energization elements formed for implantation within or upon biocompatible devices where the structure of the millimeter- or smaller-sized energization elements provides enhanced function for the energization element while maintaining biocompatibility.

One such energization element used to power a device may be a battery. When using a battery in biomedical type applications, it may be important that the battery structure and design accommodate aspects of biocompatibility. Therefore, a need exists for novel examples of forming biocompatible batteries for use in biocompatible energization elements that may have significantly improved containment aspects.

There are several micro-batteries which have been developed, some of which are designed to be implantable or otherwise associated with a medical or other device that require a power source for operation. For purposes of this specification, a micro-battery is defined by its relatively small dimensions. Specifically, at least one dimension (that is the length, width or thickness of the battery) shall be less than one millimeter (1.0 mm), and a second dimension shall be less than one centimeter (1.0 cm), whereas the volume of the micro-battery shall be less than 0.003 cc or three thousandths of a cubic centimeter.

It is possible to prepare batteries with these dimensions by additive manufacturing , by winding the electrodes, or by picking and placing active materials into place. These batteries can be made in a variety of shapes, including cylindrical, prismatic, or arcuate shapes. When biocompatible materials are used for the miniaturized power source, the power source is biocompatible. For example, carbon-zinc batteries, with a zinc salt electrolyte, zinc negative electrode, and manganese dioxide positive electrode can be biocompatible.

There exists a need for a micro-power supply that is biocompatible, may be used in medical and other small devices, and that is capable of repeated or continuous operation by providing required energy while the device is being, bent, flexed or otherwise manipulated and after such manipulation.

### SUMMARY OF THE INVENTION

Accordingly, improved, flexible micro-batteries and designs for use in biocompatible energization elements have been disclosed. Micro-batteries used in ophthalmic medical devices may have unique and challenging requirements such as the need for mechanical robustness, a degree of flexibility, and biocompatibility. A contact lens using a micro-battery may require the battery to possess the qualities of the lens by having a long shelf life, having a measure of flexibility and maintaining integrity and operability after being manipulated, It may also need to be biocompatible for the period starting with lens manufacturing through the usage lifetime of the lens. This period exposes the micro-battery to the saline solution within the lens, either directly or through an intermediate layer, and the micro-battery may need not only maintain its capacity and ability to provide the required power to the lens, but also be adequately sealed to prevent leaching of the battery components. The dimensions of a micro-battery make isolation of the battery components particularly challenging as the surface area to volume ratio of the micro-battery may be very high.

The micro-battery may be stored within an ophthalmic lens for years, with the lens containing the micro-battery stored inside of a sealed package filled with a saline packing solution. This storage environment is similar to being stored in sterile saline solution in which the ophthalmic lens is immersed. This storage condition and the environment of an ophthalmic lens or other device in standard conditions may require that the micro-battery be designed to tolerate a given environment without failure due to water ingress through the packaging into the interior of the micro-battery which may also lead to swelling. The micro-battery packaging may have a measurable level of permeability. Osmotic pressure differences may, therefore, be created which may direct water to migrate into the micro-battery interior. Often, conventional battery electrolytes are non-aqueous and do not tolerate moisture contamination, or are highly concentrated acidic solutions (for example, zinc chloride) or basic solutions, such as potassium hydroxide. Use of an electrolyte with a low salt concentration may be a possible solution to reduce the osmotic pressure difference between the electrolyte and packing solution surrounding a lens containing the micro battery.

Another issue related to biocompatibility and osmotic pressure is the pH of the electrolyte. Typically, aqueous battery electrolytes may not be biocompatible. In a typical alkaline battery, the potassium hydroxide electrolyte is strongly alkaline to increase ionic conductivity. In a carbon zinc or LeClanche cells the acid pH of the electrolyte may strongly influence hydrogen gas production on the zinc surface. Strongly acidic or basic electrolytes are not biocompatible. Many typical corrosion inhibitors such as mercury are not biocompatible either.

Many micro-batteries, especially those mass-produced or those needing biocompatibility are encased in rigid exteriors. Their rigidity typically does not allow such batteries to be utilized in flexible devices. Furthermore, the rigid casing design limits the dimensions of the battery which are possible, since a minimum casing thickness is required to maintain rigidity.

Batteries utilizing conductive traces require both flexible traces and flexible substrates on which to support the trace. Such flexibility is not found in materials compatible with an oxidizing battery environment. Instead, the batteries of the prior art are typically constructed to be generally immobile after being manufactured. Movement of the battery may adversely affect connections, sealing of the exterior and otherwise affect the proper operation of the battery.

One general aspect includes a biomedical device including an electroactive component, a biocompatible battery, and a first encapsulating layer. The first encapsulating layer encapsulates at least the electroactive component and the biocompatible battery. In some examples, the first encapsulating layer may be used to define a skirt of a contact lens, surrounding internal components of an electroactive lens with a biocompatible layer of hydrogel that interacts with the user's eye surface. In some examples the nature of the electrolyte solution provides improvements to the biocompatibility of the biomedical device. For example, the composition of the electrolyte solution may have lowered electrolyte concentrations than typical battery compositions. In other examples, the composition of electrolytes may mimic the biologic environment that the biomedical device occupies, such as the composition of tear fluid in a non-limiting example.

According to one aspect of the present invention, an electrochemical micro-battery with biocompatible components is provided that comprises an anode, which may be cylindrical, extending along a first vector and a generally planar cathode extending along a second vector. The second vector is generally parallel to said first vector, and the cathode is disposed from the anode by a predetermined space. A cathode collector is in electrical contact with the cathode and extends along the second vector. In an aspect, the cathode collector is positioned within the cathode. The electrochemical micro-battery may also includes an electrolyte positioned generally surrounding both the anode and the cathode and positioned within the predetermined space to provide ionic conductivity between the anode and cathode.

In an aspect, the electrochemical battery may further comprise an anode current collector, wherein the anode and the anode current collector are bonded in electrical communication. The anode and the anode current collector are positioned to extend along the first vector in a first stacked arrangement, and the cathode and said cathode current collector are bonded in electrical communication, and are positioned to extend along the second vector in a second stacked arrangement. The first stacked arrangement and the second stacked arrangement are separated relative to each other by the predetermined space. A separator may be positioned between the first stacked arrangement and the second stacked arrangement within the predetermined space.

Packaging may generally surround the anode, cathode, cathode collector and the electrolyte. Terminal ends of the anode may extend through the packaging along a first vector, and the cathode collector may also extend through the packaging along a second vector. The packaging may have a generally uniform thickness. The packaging may be customized and accommodate an electrochemical battery cell which is formed into a desired shape in three dimensions. The packaging may prevent water and oxygen migration through said packaging. In an aspect, the packaging may comprise a polymer coated with a metal oxide. The water vapor transmission rate of the packaging may be less than 1 g/m2-day when measured at between 85 and 100% relative humidity and between 20 and 40 degrees Celsius. Thus, in an electrochemical micro-battery, with a volume equal to or less than three cubic millimeters (3.0 mm3), having an interior space which is encapsulated by biocompatible packaging, which in one aspect is positioned in ion communication with a bodily fluid, or an artificial bodily fluid such as saline solution, the packaging may act to inhibit mass transfer between the interior space and the bodily fluid or saline solution.

The electrochemical micro-battery may be shaped in all three dimensions. In some examples, the electrochemical micro-battery may include a planar shape as well as a shape wherein both a first vector and a second vector are arcuate, and wherein the first vector and second vector are concentric to each other.

The electrochemical micro-battery may also include an anode made of zinc. In an aspect of the invention the anode may be a zinc wire. The cathode of the present invention comprises manganese dioxide, a conductive additive material, and a binder. The cathode collector may comprise a wire shaped metal such as titanium and may be positioned adjacent or alternatively within the cathode. In an embodiment where the cathode collector is positioned within the cathode, the diameter of the anode may equal the thickness of the cathode, so that the thickness of the electrochemical cell equals the anode diameter in addition to the packaging thickness.

The first electrochemical cell of the micro-battery may operate as a single cell or be connected to a second electrochemical cell in series or parallel to the first electrochemical cell. In the series embodiment, the anode of the first electrochemical cell may be electrically connected to the cathode collector of the second electrochemical cell. The anode of the electrochemical cell may be welded to the cathode collector of the second electrochemical cell to form a mechanically secure and electrically communicating connection. The micro-battery cells may be independently packaged or the packaging of the first electrochemical cell and the packaging of the second electrochemical cell may be joined as to form a contiguous package. In an aspect, when the second electrochemical cell is connected in series to said electrochemical cell, the anode of the electrochemical cell is electrically connected to a cathode collector of said second electrochemical cell, and the packaging of the electrochemical cell and the packaging of the second electrochemical cell are joined as to form a contiguous package. In an aspect wherein the anode of the electrochemical cell further includes an anode collector in electrical communication with the anode of the electrochemical cell, the anode collector extends out of the electrochemical cell and extends into the second electrochemical cell, and wherein the anode collector is electrically connected to the cathode of the second electrochemical cell, and wherein the packaging of the electrochemical cell and the packaging of the second electrochemical cell are joined as to form a contiguous package.

In an aspect, the volume of the electrochemical battery may be equal to or less than three cubic millimeters (3.0 mm3). The anode may have a length extending along the first vector, and a width and thickness extending perpendicular to said first vector, wherein the width is greater than the thickness, and the ratio of the length to the width is greater than twenty to one (20: 1). The cathode may have a length extending along the second vector, and a width and thickness extending perpendicular to the second vector, the width is greater than said thickness, and the ratio of the length to the width is greater than ten to one (10:1).

In an aspect, the interior space of the micro-battery may comprise an aqueous neutral electrolyte solution, such as zinc acetate. The concentration of the zinc acetate in the electrolyte may comprise less than ten weight percent of said electrolyte (10 wt%). The pH of the electrolyte may be between 6 and 8, wherein the packaging is positioned in ionic communication with a saline solution, the difference between the osmotic pressure of the electrolyte relative to the osmotic pressure of the saline solution is less than ten atmospheres (10 atm). The anode may comprise zinc and the cathode may comprise manganese dioxide. The anode current collector and the cathode current collector may each comprise titanium, tantalum, platinum or other electrically conductive, flexible, biocompatible material. The anode may include both zinc powder, and a zinc article such as zinc foil extending the length of the battery, wherein the zinc powder is in electrical communication with the zinc article.

The micro-battery may be constructed according to a method comprising the steps of: forming a cathode having a length and thickness, wherein the ratio of the length to the thickness is equal to or greater than 50:1; attaching the cathode to a cathode collector which extends the length of the cathode to form a cathode assembly; forming an anode having a length and thickness, wherein the ratio of the length to the thickness is equal to or greater than 50: 1 ; distribute an aqueous electrolyte around both the anode and the cathode assembly to enable ionic communication between the cathode and anode; and placing the cathode assembly, the electrolyte and the anode within a first and second portion of thermoplastic packaging. The first and second portions may envelop all of the electrolyte, a portion of the cathode assembly and a portion of the anode to form a battery interior bounded by sides of the battery interior, except to enable an end portion of the cathode assembly and anode to extend out of the battery interior at both a first and second end of the micro-battery; sealing the battery interior by heating the first and second portions of the packaging along the length of the battery interior sides, and sealing the battery interior at the first and second end of the micro-battery by sealing the packaging around the extending anode and cathode assembly; and removing packaging external to the sealed micro-battery. In an aspect of the method, the first and second portions of the packaging may be placed within an ultrasonic welder, and the ultrasonic welder may seal the first and second portions of the packaging around the battery interior by sealing the packaging, and cutting the packaging at the seal in one step. In an aspect, a separator may be inserted between the anode and cathode. In another aspect, the anode is attached to an anode collector, and the anode collector is positioned to extend out of the battery interior at both the first and second ends of the micro-battery.

These and other features, advantages, and objects of the present invention will be further understood and appreciated by those skilled in the art by reference to the following specification, claims, and appended drawings.

### BRIEF DESCRIPTION OF THE DRAWINGS

FIG. 1 is an exemplary cross-sectional view of an electrochemical battery cell taken along a normal to the vector L (length);
FIG. 2 is an exemplary cross-sectional view of the electrochemical battery cell taken along plane normal to the vector H (height);
FIG. 3 is an exemplary cross-sectional representational view of the electrochemical battery cell of the present invention;
FIG. 4 is an exemplary perspective view of the electrochemical battery cell with the packaging portion exploded;
FIG. 5A is an exemplary perspective view of the packaging portion of the electrochemical battery cell, according to one embodiment;
FIG. 5B is an exemplary perspective view of the packaging portion of the electrochemical battery cell, according to another embodiment;
FIG. 6 is an exemplary cross-sectional view of the electrochemical battery cell of the present invention disposed in an ultrasonic welding fixture depicting a method of sealing the exterior packaging;
FIG. 7 is an exemplary cross-sectional view of the shaped battery package illustrating two cells in series in an arcuate shape;
FIG. 8 is an exemplary cross-sectional view of the shaped battery package showing two cells in series in an arcuate shape and highlighting how the cells are electrically connected;
FIG. 9 is an exemplary enlarged section of the electrical connection between the two cells of the shaped battery package depicted in FIG. 8;
FIG. 10 is an exemplary exploded view of the electrochemical battery cell showing two cells in series in an arcuate shape, and a laser weld beam for sealing the cell packaging;
FIG. 11A is an exemplary perspective view of substrate used to prepare the present invention in the illustrative example;
FIG. 11B is an exemplary perspective view of an interim form of the cathode and cathode collector assembly of the present invention as described in the illustrative example;
FIG. 11C is an exemplary perspective view of the cathode and cathode collector assembly of the present invention as described in the illustrative example; and
FIG. 11D is an exemplary perspective view of the present invention as prepared in the substrate as described in the illustrative example.
FIG 12A-C illustrates examples of water storing features in a micro-battery cell.

### DETAILED DESCRIPTION OF THE INVENTION

Methods of forming flexible micro-batteries with improved biocompatibility are disclosed in the present application. In the following sections, detailed descriptions of various examples are described. The descriptions of examples are exemplary embodiments only, and various modifications and alterations may be apparent to those skilled in the art. Therefore, the examples do not limit the scope of this application. In some examples, these biocompatible batteries may be designed for use in, or proximate to, the body of a living organism.

### Glossary

In the description and claims below, various terms may be used for which the following definitions will apply:
"Anode" as used herein refers to an electrode through which electric current flows into a polarized electrical device. The direction of electric current is typically opposite to the direction of electron flow. In other words, the electrons flow from the anode into, for example, an electrical circuit.

Battery as used herein refers to an electrochemical power source which consists of a single electrochemical cell or a multiplicity of electrochemical cells, suitably connected together to furnish a desired voltage or current. The cells may be primary (non-rechargeable) or secondary (rechargeable) cells.

"Binder" as used herein refers to a polymer that is capable of exhibiting elastic responses to mechanical deformations and that is chemically compatible with other energization element components. For example, binders may include electroactive materials, electrolytes, polymers, etc. In some examples, binder may refer to a substance that holds particles and / or particles + liquid together in a cohesive mass.

"Biocompatible" as used herein refers to a material or device that performs with an appropriate host response in a specific application. For example, a biocompatible device does not have toxic or injurious effects on biological systems.

"Cathode" as used herein refers to an electrode through which electric current flows out of a polarized electrical device. The direction of electric current is typically opposite to the direction of electron flow. Therefore, the electrons flow into the cathode of the polarized electrical device, and out of, for example, the connected electrical circuit.

"Coating" as used herein refers to a deposit of material in thin forms. In some uses, the term will refer to a thin deposit that substantially covers the surface of a substrate it is formed upon. In other more specialized uses, the term may be used to describe small thin deposits in smaller regions of the surface.

"Electrode" as used herein may refer to an active mass in the energy source. For example, it may include one or both of the anode and cathode.

"Energized" as used herein refers to the state of being able to supply electrical current or to have electrical energy stored within.

"Energy" as used herein refers to the capacity of a physical system to do work. Many uses of the energization elements may relate to the capacity of being able to perform electrical actions.

"Energy Source" or "Energization Element" or "Energization Device" as used herein refers to any device or layer which is capable of supplying energy or placing a logical or electrical device in an energized state. The energization elements may include batteries. The batteries may be formed from alkaline type cell chemistry and may be solid-state batteries or wet cell batteries including aqueous alkaline, aqueous acid or aqueous salt electrolyte chemistry or non-aqueous chemistries, molten salt chemistry or solid state chemistry. The batteries may be dry cell (immobilized electrolyte) or wet cell (free, liquid electrolyte) types.

"Fillers" as used herein refer to one or more energization element separators that do not react with either acid or alkaline electrolytes. Generally, fillers may include substantially water insoluble materials such as carbon black; coal dust; graphite; metal oxides and hydroxides such as those of silicon, aluminum, calcium, magnesium, barium, titanium, iron, zinc, and tin; metal carbonates such as those of calcium and magnesium; minerals such as mica, montmorollonite, kaolinite, attapulgite, and talc; synthetic and natural zeolites such as Portland cement; precipitated metal silicates such as calcium silicate; hollow or solid polymer or glass microspheres, flakes and fibers; and the like.

"Functionalized" as used herein refers to making a layer or device able to perform a function including, for example, energization, activation, and/or control.

"Mold" as used herein refers to a rigid or semi-rigid object that may be used to form three-dimensional objects from uncured formulations. Some exemplary molds include two mold parts that, when opposed to one another, define the structure of a three-dimensional object.

"Power" as used herein refers to work done or energy transferred per unit of time.

"Rechargeable" or "Re-energizable" as used herein refer to a capability of being restored to a state with higher capacity to do work. Many uses may relate to the capability of being restored with the ability to flow electrical current at a certain rate for certain, reestablished time periods.

"Reenergize" or "Recharge" as used herein refer to restoring to a state with higher capacity to do work. Many uses may relate to restoring a device to the capability to flow electrical current at a certain rate for a certain reestablished time period.

"Released" as used herein and sometimes referred to as "released from a mold" means that a three-dimensional object is either completely separated from the mold, or is only loosely attached to the mold, so that it may be removed with mild agitation.

"Stacked" as used herein means to place at least two component layers in proximity to each other such that at least a portion of one surface of one of the layers contacts a first surface of a second layer. In some examples, a coating, whether for adhesion or other functions, may reside between the two layers that are in contact with each other through said coating.

"Traces" as used herein refer to energization element components capable of connecting together the circuit components. For example, circuit traces may include copper or gold when the substrate is a printed circuit board and may typically be copper, gold or printed film in a flexible circuit. A special type of trace is the current collector. Current collectors are traces with electrochemical compatibility that make the current collectors suitable for use in conducting electrons to and from a cathode or anode of an electrochemical cell.

There may be other examples of how to assemble and configure batteries according to the present invention, and some may be described in following sections. However, for many of these examples, there are selected parameters and characteristics of the batteries that may be described in their own right. In the following sections, some characteristics and parameters will be focused upon.

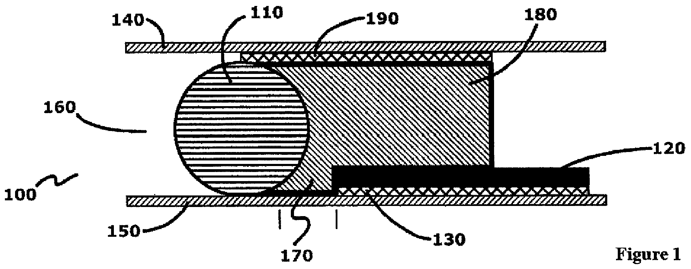

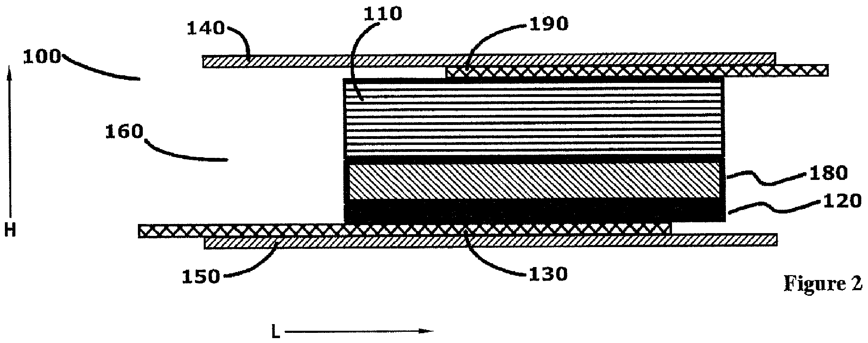

Referring to FIG. 1 and FIG. 2, there is shown two different cross sectional representations of an exemplary electrochemical battery cell 100 according to one embodiment.

FIG. 1 is a cross section representation along a plane normal to the vector L (length) and FIG. 2 is a cross section representation along a plane normal to the vector H (height).

The electrochemical battery cell includes a cylindrical anode 110 which extends along the length of the electrochemical battery cell and serves as the negative electrode. More specifically, the anode 110 extends along a vector parallel to the length vector L shown in FIG. 2. In this embodiment, the anode 110 is generally cylindrical in shape and circular in cross section. The diameter of the anode 110 is small enough and its aspect ratio (length to width ratio) is large enough to enable flexibility of the anode 110. The diameter may be sized large enough to accommodate the absence of any current collector. As the electrochemical battery cell discharges, reactive material from the anode may electrochemically react and go into solution. As the anode reactive material leaves the anode, the surface of the anode may pit or otherwise change and a general decreasing diameter may be realized. The remaining anode material may remain contiguous to remain capable of acting as an anode current collector throughout its length and as such may be capable of conducting electrons from the anode out of the electrochemical battery cell.

As may be described again below in more detail, in some examples the anode 110 is positioned on one side of the electrochemical battery cell in this embodiment adjacent the exterior first and second packaging portions 140 and 150. The first packaging portion 140 and the second packaging portion 150 are disposed relative each other to form a cell interior 160. The packaging portions are manufactured from a material that may be bonded or otherwise sealed to itself. The packaging portion material may also be flexible and capable of enclosing all components located within the cell interior 160.

In some examples, the electrochemical battery cell further includes a cathode 120 which also extends along the length of the electrochemical battery cell and serves as the positive electrode. More specifically, the cathode 120 extends along a vector parallel to the length vector L shown in FIG. 2. In this embodiment, the cathode 120 is generally planar and rectangular in cross section. The cathode may be positioned in electrical contact with a cathode current collector 130, and in this embodiment, may be attached onto the cathode current collector 130. This arrangement of coating the cathode 120 onto a flexible conducting current collector 130 provides a flexible cathode construction that remains coherent while the electrochemical battery cell 100 is twisted, bent or otherwise contorted. As the electrochemical battery cell electrochemically discharges, reactive material from the cathode 120 may electrochemically react and possibly expand. The cathode may be designed to accommodate such expansion by being made with an appropriate porosity and by being made from appropriate ingredients that accommodate any such expansion. Such accommodation may enable the cathode 120 to maintain adhesion with the cathode current collector 130 and otherwise remain coherent.

The cathode 120 and the cathode current collector 130 are shown positioned and supported on the second packaging portion 150 and at a position opposed to the anode 110 within the cell interior 160. Although the sizes of the anode 110 and the cathode 120 shown in FIG. 1 and FIG. 2 are not necessarily to scale, the relative positions of the anode and cathode are gapped by a predetermined space 170. The dimensions of the predetermined space within the cell interior may be important to ensure the anode and cathode do not make direct contact with each other which would cause a battery short circuit. The dimension may also not be so large as to prevent effective ionic charge diffusion which directly relates to the rate capability of the electrochemical battery cell. Although in alternative embodiments, a permeable membrane battery separator may be used, the cell construction of the present embodiment obviates the need for added manufacturing complexity and expense of adding such a component.

The cathode 120 and the anode 110 ionically communicate via an electrolyte 180 which is positioned such that both the anode and cathode may ionically communicate with the electrolyte material. The electrolyte 180 may allow the flow of electric charge between the anode 110 and the cathode 120. The electrolyte 180 may be a liquid, gel or semi-solid provided that it is flexible and capable of moving within the cell interior 160 while performing its task of providing ionic diffusion between the anode 110 and cathode 120.

The electrons generated by the electrochemical battery cell 100 may be conducted from the cell via an anode collector tab 190. This anode collector tab 190 may be affixed to an end of the anode 110 to be in electric communication with the anode 110. The anode collector tab 190 provides a shape appropriate extension of the anode 110 so that the cell interior 160 may be appropriately sealed, with both the anode 110 and cathode 120 electrically communicating exterior of the cell interior 160 and both first and second packaging portions 140 and 150. The position of the anode collector tab 190 in FIG. 1 and FIG. 2 is shown intermediate the anode 110 and the first packaging portion 140. As may be seen, this positioning may add height or a protrusion to the electrochemical battery cell 100 and an alternative position may be preferred to avoid increasing these dimensions. The anode collector tab 190 is shaped relative to what it may be connecting to in a device. This shape may be selected by one skilled in the art to create an electrically secure connection between the anode tab and the device.

Although not shown in the embodiment of FIG. 1 and FIG. 2, both the anode collector tab 190 and the cathode current collector 130 may extend beyond the respective ends of the anode 110 and the cathode 120. These extending portions of the anode collector tab 190 and the cathode current collector 130 enable more efficient sealing of the cell interior 160. The first and second packaging portions 140 and 150 may be both sealed to each other to seal the cell interior 160 from the exterior or the electrochemical battery cell 100, and sealed around the anode collector tab 190 and the cathode current collector 130 which extend exterior the sealed first and second packaging portions 140 and 150. As such, the anode collector tab 190 becomes the negative exterior contact for the electrochemical battery cell 100, and the cathode current collector 130 becomes the positive exterior contact for the electrochemical battery cell.

In operation, when a load (not shown) is electrically connected to both the anode collector tab 190 and the cathode current collector 130 to form a circuit, the anode 110 releases electrons via the anode collector tab 190 to the negative exterior contact while simultaneously releasing ions into the electrolyte 180. The cathode 120 accepts the electrons flowing from the circuit through the positive exterior contact and the cathode current collector 130 and electro chemically reacts to equilibrate the chemical potential of the electrochemical battery cell. The present arrangement of the electrochemical battery cell 100 may effectively operate while in torsion, while being bent, or otherwise manipulated.

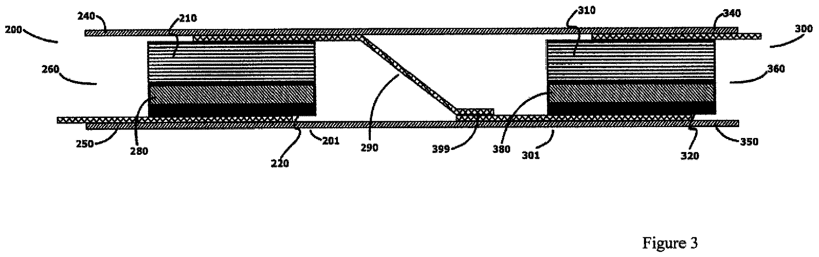

The electrochemical battery cell 100 shown in FIG. 1 and FIG. 2 may be electrically and mechanically coupled in series with an identical cell as shown in FIG. 3. In FIG. 3, there is shown a first electrochemical battery cell 200 and its respective negative end portion 201. The first electrochemical battery cell 200 possesses an anode 210, a cathode 220 and an anode collector tab 290. Also, shown in FIG. 3 is a second electrochemical battery cell 300 and its positive end portion 301. The second electrochemical battery cell also has an anode 310, a cathode 320 and a cathode current collector 330. As shown in FIG. 3 the anode collector tab 290 of the first electrochemical battery cell 200 is connected to the cathode current collector 330 of the second electrochemical battery cell 300 at connection point 399. This mechanical and electrical coupling arrangement creates a multi-cell battery with two electrochemical battery cells in series to provide an effective voltage twice that of each individual cell. Alternative coupling arrangements may be used to create parallel and other multi-cell batteries using two or more cells.

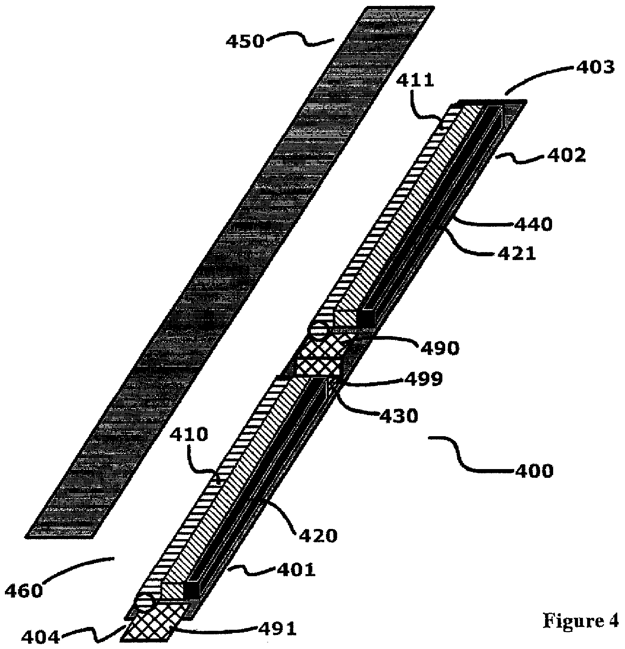

The respective packaging portions 240 and 340, and 250 and 350 are shown joined to form a contiguous exterior surface or may be manufactured as single packaging portions. However as may be described in more detail the respective cell interiors 260 and 360 are preferably segregated. In FIG. 4, there is shown an alternative view of the two batteries in series 400. A first electrochemical battery cell 401 is electrically and mechanically coupled to a second electrochemical battery cell 402. Both the first electrochemical battery cell 401 and the second electrochemical battery cell 402 have respective anodes 410 and 411, and respective cathodes 420 and 421. Each cathode is associated with and electrically coupled to a cathode current collector, and the first electrochemical battery cell cathode 420 is associated with first electrochemical battery cell cathode current collector 430, and the second electrochemical battery cell cathode 421 is likewise associated with a second electrochemical battery cell cathode current collector (not shown). The second electrochemical battery cell anode 411 is electrically and mechanically associated with a second electrochemical battery cell anode collector tab 490 which is also electrically and mechanically associated with the first electrochemical battery cell cathode current collector 430 at connection point 499.

The two electrochemical cells in series are surrounded on the cathode side by a first packaging portion 440 which extends the length of the two cells in series but is terminated at a first end 403 to enable the second electrochemical battery cell cathode current collector to overhang the first packaging portion. At a second end 404, the first packaging portion is similarly terminated to enable the first electrochemical battery cell anode collector tab 491 to extend beyond the second end. A second packaging portion 450 similar in length and width to the first packaging portion 440 is positioned adjacent the anode side of the two batteries in series and the cell interior 460 may be sealed by associating the first packaging portion 440 and second packaging portion adhesively or by welding in a manner that allows both the second electrochemical battery cell cathode current collector and the first electrochemical battery cell anode collector tab to extend beyond the packaging portions to enable them to be in electrical communication with an external load (not shown).

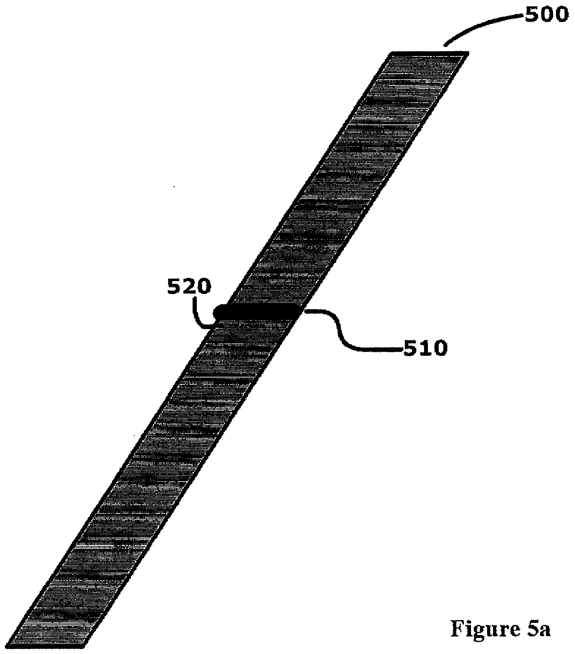

It may be preferred to segregate the cell interior 460 into individual cell interiors associated with each electrochemical battery cell. This may be done by providing a divider adjacent the connection point 499. Referring to FIG. 5A there is shown a packaging portion 500 that may be used to provide the cell interior segregation of this embodiment. The packaging portion 500 includes a divider 510 which may be affixed to the packaging portion at a segregation spot 520 on the packaging portion. The divider 510 may be configured to act as a dam between two electrochemical battery cells in series to prevent ionic conduction and convective flow between the cells. The divider 510 may be laser welded to the packaging portion and then again laser welded when the packaging portion 500 is sealed relative a second packaging portion via laser welding or an alternative connecting method. In an alternative embodiment, the divider may be affixed via alternative joining methods such as ultrasonic welding, or heat welding methods.

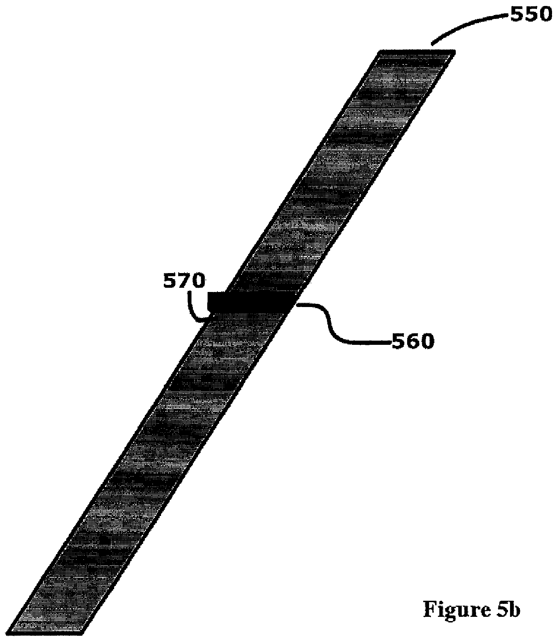

In FIG. 5B, there is shown an alternative embodiment of providing segregation of the cell interior. A packing portion 550 includes a divider 560 at a segregation spot 570 on the packaging portion. The divider 560 may be secured to the packaging portion and a second packaging portion via adhesive and more preferably via UV-cured adhesive. The first and second packaging portions may be sealed relative each other at their peripheries and the divider 560 adhesively secured to both packaging portions to provide the segregation of the cell interior.

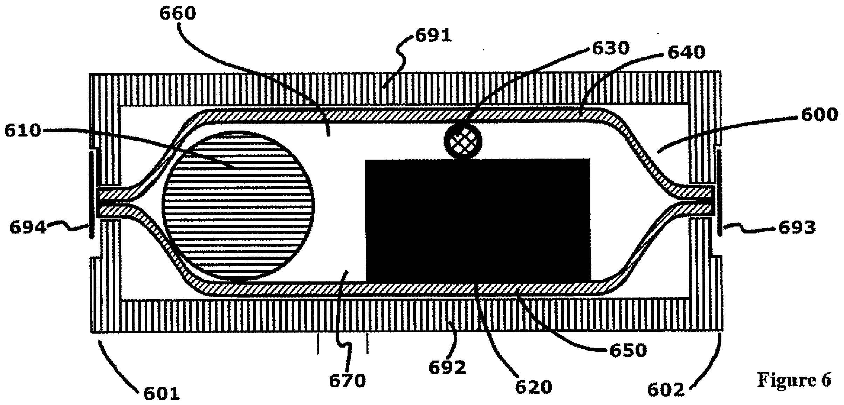

In FIG. 6, there is shown a cross-sectional view of an alternative embodiment of the electrochemical battery cell 600. In this embodiment, the electrochemical battery cell 600 possesses a cylindrical shaped electrochemical battery cell cathode current collector 630, which is shown positioned between the electrochemical battery cell cathode 620 and a first packaging portion. Although not shown, the electrochemical battery cell cathode current collector may alternatively be disposed entirely within or partially within the cathode 620. An anode 610 is located within the cell interior 660 at a predetermined distance 670 from the cathode 620. The cell interior is filled with electrolyte (not shown) to provide required ionic conductivity between the anode and cathode electrodes.

A method of joining both the first packaging portion 640 and the second packaging portion 650 along their respective peripheries may be described using FIG. 6. The electrochemical battery cell 600 may be placed within an ultrasonic welding fixture which is shown representatively in cross section surrounding a portion of the electrochemical battery cell 600. The ultrasonic welding fixture comprises both an ultrasonic welding horn 691 and an ultrasonic welding anvil 692. The electrochemical battery cell 600 is placed within the fixture and the ultrasonic welding horn 691 is brought into contact with the first packaging portion 640 at the locations where a weld is desired. In this methods embodiment, a weld is desired both at the anode side of the electrochemical battery cell 601 and at the cathode side of the electrochemical battery cell 602. A controlled pressure is applied by the fixture to the electrochemical battery cell bringing together the first packaging portion 640 and the second packaging portion 650. The ultrasonic horn is vibrated at a frequency appropriate for the material at the desired amplitude for a predetermined amount of time that is required to weld the first and second packaging portions. The controlled pressure may be maintained for a second predetermined time to allow the packaging portions to fuse.

Prior art ultrasonic welding of plastics takes place with the motion of the ultrasonic horn largely perpendicular to the plane of the items being joined (for the side seal, along vector H shown in FIG. 2), and this may result in a wide joint which may be objectionable. In some examples, when the motion of the ultrasonic horn is largely in the same plane as the side seal (for the linear side seal, a plane extending along vector L shown in FIG. 2), a relatively narrower seal may be achieved. The vector of the horn's motion is in the same plane as the edge of the package being sealed. For nonlinear side seams (for example, arcuate side seams), the horn's motion relative to the side seam may vary at different positions along the side seam, but may remain in the same plane as the packaging being welded.

Excess packaging may be mechanically trimmed at ends 693 and 694, for example, by laser-cutting, ultrasonic cutting, tool-die degating, or waterjet cutting) such that the packaging portions exterior the weld is removed. Alternatively, ultrasonic weld time may be extended to cut the sealed ends 693 and 694 while sealing the packaging portions. Once the packaging portions have been welded along the periphery thus sealing the electrochemical battery cell, the second controlled pressure is removed and the ultrasonic welding horn is retracted. By this joining process, many electrochemical battery cells may be consecutively sealed.

The present electrochemical battery cell configuration is not restricted to a linear, planar construction, and instead may be constructed in multiple shapes and sizes according to various embodiments. The components of the electrochemical battery cell, as well as the packaging, may be used to shape the electrochemical battery cell to its desired shape.

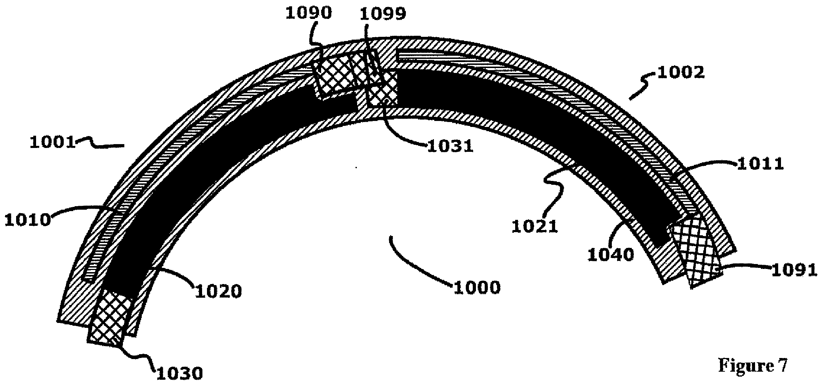

In FIG. 7 there is shown the electrochemical battery cell 1000 in an arcuate shape. In this embodiment, two electrochemical battery cells are connected in series. A first electrochemical battery cell 1001 is both electrically and mechanically connected to a second electrochemical battery cell 1002 at a connection point 1099. Both the first and second electrochemical battery cells are shown resting on a first packaging portion 1040. Although not shown, a second packaging portion is associated with the first packaging portion to form a contiguous exterior packaging exterior for the electrochemical battery cell.

The first electrochemical battery cell 1001 includes an anode 1010 and a cathode 1020. The cathode is positioned in electrical communication with a first electrochemical battery cell cathode current collector 1030. The second electrochemical battery cell 1002 similarly includes an anode 1011, and a cathode 1021. The cathode 1021 is positioned adjacent and in electrical communication with a second electrochemical battery cell cathode current collector 1031. Both the anodes 1010 and 1011 possess associated anode collector tabs which are both electrically and mechanically connected to an anode end to conduct electrons.

At connection point 1099, there is shown an electrical and mechanical connection between the first electrochemical battery cell anode collector tab 1090 and the second electrochemical battery cell cathode current collector 1031. The connection may be welded or alternatively made so that electricity may flow between both the first and second electrochemical battery cells, and so that it provides a measure of strength so that the electrochemical battery cell 1000 is fixed in the desired shape.

Each of these components in the electrochemical battery cell extend along parallel arcuate paths or vectors. For example, the anode 1010 and the anode 1011 extend along an arcuate vector the length of which is approximately the length of the electrochemical battery cell 1000. The cathode 1020 and the cathode 1021 extend along a separate arcuate vector which extends in parallel to the anode vector. The electrochemical battery cell 1000 may be configured in the shown planar C-shape, or the arcuate shape may be non- planar such as frustoconical or shaped to extend about a spherical segment such as in the body of a contact lens. The shape may be maintained by the rigidity of the components or alternatively by inclusion of a structural portion which would be included within the electrochemical battery cell but not be an active component of the electrochemical reaction. For example, a die cut titanium foil may be placed within the cell interior and intermediate the first and second packaging portions. The foil structural portion would act to maintain the desired shape of the electrochemical battery cell while not significantly increasing the non-active volume of the electrochemical battery cell.

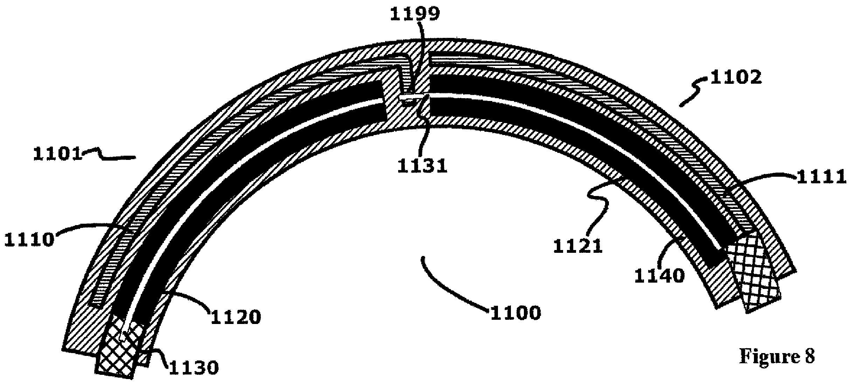

In FIG. 8, there is shown a top sectional view of an alternative embodiment of the electrochemical battery cell 1100. In this embodiment, the electrochemical battery cell 1100 possesses a cylindrical shaped electrochemical battery cell cathode current collectors 1130 and 1131, which is shown positioned between the electrochemical battery cell cathode 1120 and 1121 and a packaging portion (not shown). Although not shown, the electrochemical battery cell cathode current collector may alternatively be disposed within or partially within the cathodes 1120 and 1121. The wire shaped cathode current collectors in combination with the wire shaped anodes provide a structural rigidity which obviates the need for any non-active structural portion. The two electrochemical battery cells 1101 and 1102 that comprise the electrochemical battery cell 1100 are electrically and mechanically connected at connection point 1199.

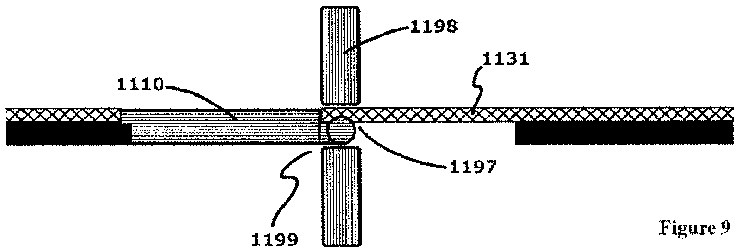

The wire shaped first electrochemical battery cell anode 1110 and the second electrochemical battery cell cathode current collector 1131 may be joined by an ultrasonic weld as shown in FIG. 9. A compressive force holds the first electrochemical battery cell anode 1110 and the second electrochemical battery cell cathode current collector 1131 together while the ultrasonic welding fixture 1198, which is representatively shown, acts to weld the two wire shaped components to form a mechanically connected joint 1197. Alternatively, the joint 1197 may be created using resistive welding of another joining technique to create an electrically communicating and mechanically sound joint. Another joining method useful to encapsulate the electrochemical battery cell is laser beam welding.

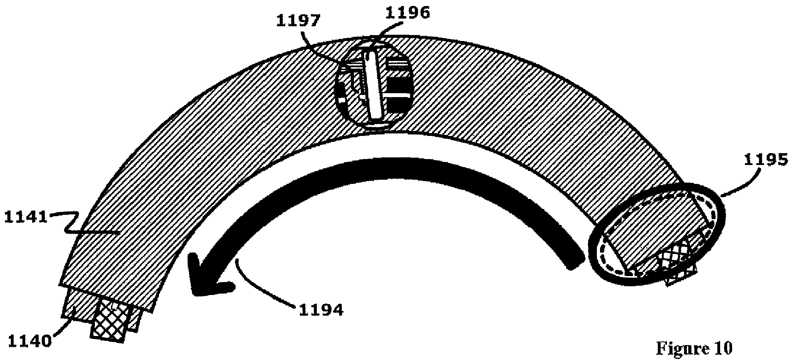

In FIG. 10, the electrochemical battery cell 1100 is shown assembled with mechanically connected joint 1197 already formed and divider 1196 created to segregate the cell interior of the first and second electrochemical battery cells. A first and second packaging portion 1140 and 1141 of equal size are placed with their peripheries aligned and compressed to create a pressurized periphery along the entire periphery of the packaging portions. This may be done in a fixture which creates the pressurized periphery at the same time, or sequentially with a moving jig or fixture. While the periphery is compressed, a laser weld beam may be passed along the electrochemical battery cell (in the direction shown by vector W 1194) and the compressed periphery that passes through the laser weld beam is welded by being melted and then joined during re-solidification. The laser fires many heating pulses per second forming separate overlapping spot welds that form a seam along the packaging portion periphery. So as not to cause local heating of the cell interior, battery components and electrolyte an appropriate laser wavelength is chosen. For polypropylene packaging material, 800 nm laser light is preferred.

Another embodiment of the electrochemical battery cell 1 100 in FIG. 8 may be described with an alternative anode construction. In this embodiment, the two electrochemical battery cells 1101 and 1102 that comprise the electrochemical battery cell 1100 are electrically and mechanically connected by sharing a common component. The anodes 1110 and 1111 each additionally comprise an anode current collector which is electrically conductive. The active anode material is then disposed onto or adjacent each anode current collector to be in electrical communication, while maintaining physical contact with the anode current collector. The use of such an anode current collector enables it to also be used as a cathode collector in an adjacently connected cell. For example, the electrochemical battery cell anode current collector (not shown) of the first electrochemical battery cell 1101 may extend into the second electrochemical battery cell and be used as the cathode current collector 1131 of the second electrochemical battery cell. By use of this common cell component, the first electrochemical battery cell 1101 and the second electrochemical battery cell 1102 are electrically and mechanically connected without the need for any weld or joint.

### EXAMPLES

The compositions and processes described here, and ways to make and use them are illustrated in the following examples.

### Example 1

### Substrate Preparation

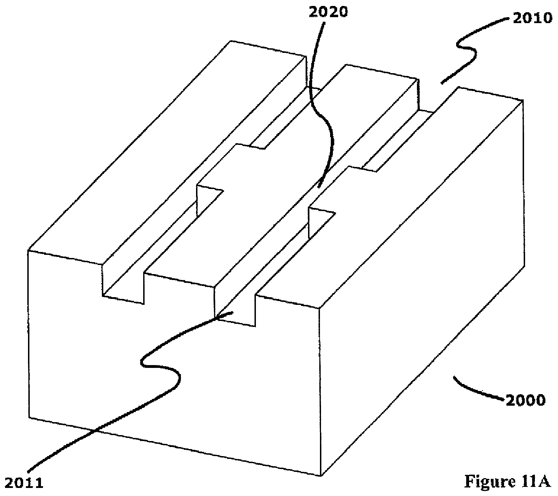

A polycarbonate block was cut into sections. First and second slots 2010, 2011 (each approximately 0.325-inch-long x 0.008-inch-deep x 0.0393-inch-wide) were milled from the surface of the block 2000 as shown in FIG. 11A. A channel 2020 (between 0.007" wide and 0.01" wide) was then cut intermediate the first and second slots 2010 and 2011, connecting the two larger slots in line. Each finished slot is used to hold a cell.

### Cathode Preparation

A cathode sheet was prepared with a composition of 10% by weight of carbon black (e.g. ACE Black AB100 from Soltex, Houston, Texas, 83-85% by weight of fine electrolytic manganese dioxide (e.g. Tronox of Stamford, Connecticut) and the balance (5- 7%) by weight PTFE (e.g. 60 wt% dispersion of PTFE in water, available as TE3859 from Dupont Polymers (Wilmington, Delaware) - has 60.6%> solids in batch, 5.7%> wetting agent) The sheet was prepared by combining the carbon black and manganese dioxide in a mixing container, and mixing at 1,000 RPM for 3 minutes in a Thinky mixer Model Number ARM-310 from Thinky of Laguna Hills, California. Then, roughly 1.05 grams of de-ionized water per gram of manganese dioxide was added to the mixing container, which was again mixed at 1,000 RPM for 3 minutes. Then, the PTFE was added, and mixed at 200 RPM in the mixer to disperse the PTFE, and then at 1,500 RPM to fibrillate the PTFE, forming a coherent mass.

The resulting coherent mass was then kneaded until the viscosity increases to the point where the material stiffness is increased and the material is formable. Pieces of battery packaging laminate consisting of a heat-resistant polymer outer layer, inner aluminum foil core, and heat-sealable polymer inner layer (e.g. packaging from Ultra Flex Corporation, Brooklyn, New York. The packaging consists of a 0.001" polyethylene heat- sealable layer on one side, a 48 gauge (0.0005") PET film on the other, and a 0.000316" aluminum foil layer in between the two) were cut, and folded lengthwise in half with the heat-resistant layer on the outside. Pieces of the coherent mass were broken off, and placed on the inside of the packaging folded lengthwise. The coherent mass was rolled down using a jeweler's mill; the material was periodically folded back on itself to enhance the fibrillation and bonding, and at times the material was rotated 90 degrees in position against the packaging to avoid its spilling out over the edge. Sheets of roughly 150 micron thickness were prepared in this manner from the cathode mix. This sheet was removed from the packaging material, placed on a weigh boat, and air-dried at room temperature for a few hours. Finally, the sheet was dried at 60°C between a few hours and overnight.

### Electrolyte Formulation

The electrolyte was first prepared using a mixture of 1.9 M NH4C1 and 0.63 M CaC12 In deionized water.

A gelled electrolyte was then prepared, as follows: an amount of electrolyte was added to a beaker containing a stir bar. This beaker was covered to prevent evaporation, and heated and stirred on a stirring hot-plate until boiling. De-ionized water was then added to replace the water which had evaporated as determined by weighing. Sufficient agar was added to the beaker to produce a mixture containing 97% by weight of the electrolyte, and 3% by weight of agar. The electrolyte with agar was stirred on the hotplate until the agar dissolved, then de-ionized water was added to replace the water which had evaporated. The mixture was then stirred and allowed to cool to room temperature, forming a soft, cloudy gel.

### Anode

Commercial pure zinc wire (e.g. (0.006" pure zinc 99.95% wire from California Fine Wire of Grover Beach, California) was obtained.

### Cathode-Current Collector Assembly Procedure

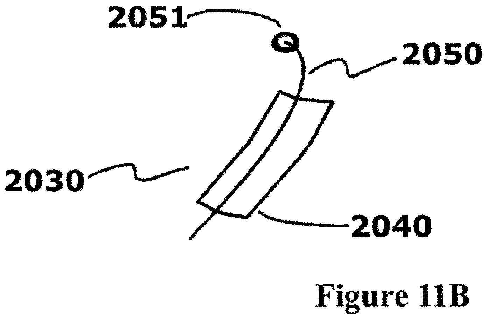

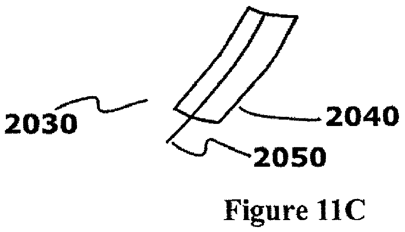

Strips of cathode material roughly 7 mm long were cut from a roughly 150 µιη thick piece of cathode material using a blade. Then, thinner strips up to 3 mm or so wide (but at least 600 µιη wide) were cut from these strips. Short lengths (roughly 2 cm to 10 cm) of 0.002 inch diameter titanium wire (e.g. 0.050 mm 99.8% pure, hard temper titanium wire from Goodfellow of Coraopolis, Pennsylvania) were cut from a roll, and their ends were attached to a plastic weigh boat with a small dot of epoxy, which was allowed to cure. The assembly of the cathode is illustrated in FIG. 11B. The cathode strips 2040 were placed beneath the wire 2050 glued at one end 2051, and the wire was held taut over the strip. With the wire held taut, a conductive glue coating (e.g. prepared containing a polymeric binder and graphite flakes e.g. TIMCAL E-LB 1020, from Timcal of Westlake, Ohio). After the conductive coating was dried enough to hold the wire 2050 to the surface of the cathode sheet 2040, the end of the wire held taut was released. After the coating was dried in air for a few hours, the wire was cut away from one end 2051 of the assembly using a blade, the other end of the wire was trimmed to a shorter length, and the cathode strip 2040 was cut to a width of between 400 and 800 µιη - see FIG. 11C.

### Cell Assembly Procedure

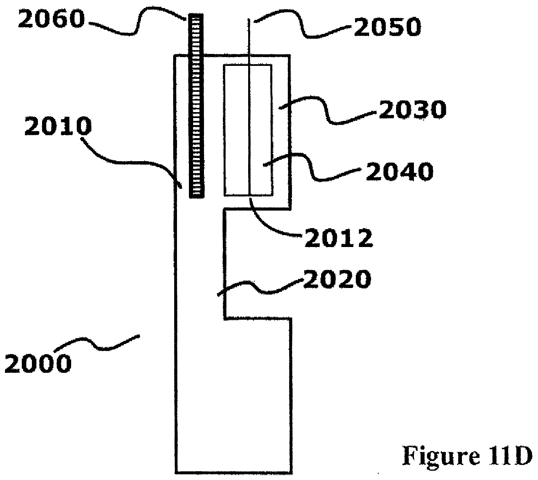

The cathode-current collector assembly was glued into the plastic substrate 2000 as shown in FIG. 11D using the conductive coating/glue. The cathode-current collector assembly 2030 was set in place with the wire facing down, to enable wetting the cathode strip 2040 later. The cathode-current collector assembly 2030 was first attached at the end 2012 of the slot 2010; the cathode -current collector assembly 2030 was then flexed away from the wall of the slot, additional conductive glue applied along the wall, and the cathode-current collector assembly 2030 pressed against the wall of the slot. If excess cathode material was present which would prevent clearance between the zinc wire 2060 inserted later and the cathode, the excess material was removed. Lengths of the zinc wire approximately 1.5 centimeters were cut and straightened. They were placed in the slot 2010 and extended out the open end of the cell; a small amount of epoxy was applied to hold the wire in place. Then, epoxy was applied across the channel opening of the slot, and polyimide tape (e.g. Kapton Brand) was placed over the opening of the slot until the epoxy had cured. At that point, the polyimide tape was removed. Then, electrolyte was applied to cover the slot, and allowed to soak into the cathode. An absorbent paper wipe was then used to remove all of the electrolyte from the slot and the area of the substrate surrounding the slot, except for that absorbed within the cathode. Gelled electrolyte was then added to fill the slot. A piece of polyimide adhesive tape (e.g. Kapton Brand) was placed over the top of the slot including the end; this tape would normally extend end-to-end with two cells vertically in place.

Then, two-part epoxy was used to cover over top of the polyimide tape, and also to cover the ends of the block where the wires exit the slot. Once the epoxy was cured, the polycarbonate substrate was secured. Then, smooth-jawed alligator clips were used to clip onto the wires (titanium and zinc) coming out of the cells, taking care not to short the cells. Insulator was placed between the clips to prevent them from touching. The insulators were removed after the epoxy had gelled, but before it was fully hardened. The cells were tested using ordinary battery test equipment.

Table 1 is the performance and general description of the electrochemical battery cell which was prepared as described in Example 1.

**TABLE 1**

| | |
|---|---|
| Capacity | 140 µA-h at 10 µA |
| Resistance | ∼800-1500Ω (typical) at 100 µA |
| Cell dimensions (slot in substrate) | 0.325 inch long x 0.008 inch deep x 0.0393 inch wide (∼0.03 inch wide)-roughly 8.3 mm x 200 µm x 1mm(∼1.7 µL) |
| Open Circuit Voltage | 1.5V (nominal) |

### Example 2

### Zinc Powder Anode

An anode using zinc as a bound powder was prepared. Zinc powder (e.g. EEF grade from Umicore, Belgium) was prepared using PTFE (from TE3859 dispersion) as a binder, and using Acetylene Black (AB100%) as a conductive filler, with a composition of 5% acetylene black, 5% PTFE, and 90% zinc by weight. 20 grams of zinc were mixed by hand with 1.11 grams of acetylene black using a plastic spatula to form a visually homogeneous mixture. This mixture was then mixed using a Thinky ARM-310 mixer for three minutes at 1000 RPM with 9 grams of de-ionized water. Then, 1.85 grams of 60% PTFE (TE3859) dispersion were added to the mixture, which was mixed for three minutes at 200 RPM to disperse, then three minutes at 1000 RPM to fibrillate to form a coherent mass. This coherent mass was then kneaded and rolled between pieces of battery packaging (from Ultra Flex Corporation, Brooklyn, New York. The packaging consists of a 0.001" polyethylene heat-sealable layer on one side, a 48 gauge (0.0005") PET film on the other, and a 0.000316" aluminum foil layer in between the two). As with the cathode sheet preparation, pieces of this laminate were cut, and folded lengthwise in half with the heat-resistant layer on the outside. Pieces of the coherent mass were broken off, and placed on the inside of the packaging folded lengthwise. The coherent mass was rolled down using a jeweler's mill; the material was periodically folded back on itself to enhance the fibrillation and bonding, and at times the material was rotated 90 degrees in position against the packaging to avoid its spilling out over the edge. Sheets of roughly 150 micron thickness were prepared in this manner from the cathode mix. This sheet was removed from the packaging material, placed on a weigh boat, and air-dried at room temperature for a few hours. Finally, the sheet was dried at 60°C between a few hours and overnight.

Strips of the anode material approximately 300 microns wide x 150 microns thick x 7-8 mm long were cut out, and then attached using the conductive glue (Timcal E-LB 1020) to 50 micron titanium wire current collectors (e.g. from Goodfellow, Coraopolis Pennsylvania), as was done using for the cathode.

A cathode sheet consisting of 10 wt% acetylene black (AB 100), 5 wt% PTFE (from TE3859 dispersion), and 85% fine Mn02 (Tronox) was prepared as described in Example 1. Strips of material roughly 10 mm wide x 150 µιη thick were cut from this sheet. Pieces of titanium foil were cut, and transparent tape was applied to leave an approximately 7 mm wide strip of bare foil. This foil was then painted over with conductive glue, and a strip of the cathode sheet was pressed in while the glue was still wet. After drying for roughly two hours to overnight at 60°C, the foil was removed from the oven, and cut into strips and inserted into an experimental holder; these strips with attached cathode acted as the counter-electrode. The experimental sample holder had a piece of zinc foil used as a quasi-reference electrode, the bound zinc sheet attached to the 50 µ titanium wire acting as the working electrode, and the titanium foil with cathode sheet attached was the counter electrode. All three electrodes were together in a glass vial containing 1.9 M NH4Cl and 0.63M CaCl2 in de-ionized water electrolyte. A test was performed on three samples, consisting of alternating open-circuit periods of 30 seconds with pulses of 5, 10, and 100 µA applied to the working electrode, followed by an open-circuit period of 30 seconds. The internal resistance of each electrode was taken as the average of the resistance determined from the voltage drop at the beginning and end of the 100 µA pulse. The three samples had resistances of 101, 183, and 145 Ω.

### Example 3

### Sealed Micro-Battery Construction

Forming Cell Components:
The cell components of the micro-battery assembled in this example are further described by the dimensions and other physical properties in Table 2.

**TABLE 2**

| | |
|---|---|
| Micro-battery dimensions | 10 mm in Length, 1.1 mm in width, 0.25 mm in thickness |
| Micro-battery volume | 2.75 cubic millimeters or 0.00275 cc |
| Anode dimensions | 7 mm in Length, 0.15 mm in width, 0.075 mm in thickness |
| Cathode dimensions | 7 mm in Length, 0.55 mm in width, 0.12 mm in thickness |
| Anode collector thickness | 0.03 mm in thickness |
| Cathode collector thickness | 0.03 mm in thickness |
| Electrolyte Volume | 0.000642 cc |
| Separator thickness | 0.030 mm |
| Packaging (each layer) thickness | 0.025 mm |

### Preparing cathode sheet:

The cathode is prepared as follows. First, the dry powders are mixed using a Waring laboratory blender. Mn02 (Tronox fine) and BP2000 carbon black (Cabot) are mixed in a 500g: 20.83 g ratio (24:1).

Once the powders have been blended, they are then transformed into a wet blend together with PTFE. The overall blend composition is 24.27 % dry powders (as mentioned above), 66.50% de-ionized water, 4.86% Triton X-100 solution, and 4.37% solution (DISP30, 60 wt% PTFE). The wet blend is then filtered using a Buchner funnel under vacuum.

After the solid mass has been prepared, it is repeatedly rolled using a jeweler's press, pasta roller, or similar to fibrillate the PTFE chains further. After each rolling step except for the last, the solid mass is re-constituted to prepare for the next step.

A custom motorized roller setup is used to transform the dough into a freestanding sheet. The material is fed through the rollers a number of times, folding the material back onto itself each time, and the gap between the rolls is reduced until the gap is 0.12mm. After this, the material is allowed to air-dry.

After the cathode is in the form of a freestanding sheet, this sheet is then attached to a current collector using an adhesive (such as EB-012 sold by Henkel, or E-LB 1020 sold by Imerys). The titanium foil current collector may be roughened by, for example, immersion in a boiling 10 weight% oxalic acid solution for ten minutes. After roughening, the titanium foil is removed, rinsed with de -ionized water, and allowed to dry thoroughly.

An Epilog FiberMark 50W pulsed Ytterbium fiber laser is used to cut titanium foil (10 micron thickness) into strips which are 400 µιη wide. The strips of cathode material are cut to the desired width, and coated with EB-012 on one side. The coated side of the cathode material is pressed onto the cut titanium. Afterwards, the laser is used to cut the titanium and cathode into individual freestanding components.

An electrolyte gel is prepared consisting of 25 wt% zinc acetate, 0.2 wt% ammonium acetate with the balance water, gelled with 6 wt% CMC (GA07 Walocel).

If desired, the cathode strip may be laminated to a separator. To accomplish this, a cathode strip on titanium is coated with electrolyte get and a piece of separator (25 µm thick Dreamweaver Silver™, available from Dreamweaver International, Greer, South Carolina) slightly wider than the cathode is placed on top of the gelled electrolyte. The cathode and separator are placed between two pieces of FEP (fluorinated ethylene propylene) film, and the entire stack is then placed between two" thick brass shim pieces. The stack is then run through an Apache AL-13P laminating machine so that the cathode and separator are mechanically bonded together.

The anode consists of a piece of zinc foil which is cut to size using a technique such as laser or ultrasonic cutting. Optionally, the zinc may be glued to a piece of roughened titanium foil using a conductive adhesive prior to cutting; the roughened titanium foil serves as the current collector for the anode. The glue used may be a carbon- filled thermoset resin such as Atom Adhesives AA-Carb 61. In the case where a thermoset resin is used, it is applied to either the zinc or the titanium. It is also possible to apply a thermoplastic resin paste, ink, or coating, such as Creative Materials (Ayer, Massachusetts) 107-25, to one side of a zinc strip and a titanium piece, and then to apply heat and pressure to join the two together.

In some cases, it is desirable to have two cells in series sharing a current collector, which acts as the anode current collector for the first cell and the cathode current collector for the second cell. In this case, the anode is attached to one part of the current collector as described above while the cathode is attached to the other side of the current collector, allowing bare current collector on either end to enable feedthroughs.

### Coated Film:

Coated packaging film refers to a polymeric film adjacent to a film with a higher barrier than that of the polymeric material, and where the said higher barrier film is formed on the polymeric film or resides on an adjacent layer. The ceramic film may be silicon oxide, aluminum oxide, titanium oxide, aluminum, gold, titanium, or the like, and the film may be formed by CVD, sputtering, plasma deposition, sol-gel, and the like. Optionally, the coated film may include alternating layers of polymer and higher barrier film deposited onto the initial higher barrier film. A preferred example of the packaging film used is Ceramis CPP-004 (CelPlast, Toronto, Canada), which is polypropylene coated with a silicon oxide barrier layer.

### Packaging the Cell:

In general, the cell is normally sealed between two pieces of polymer film, either coated or uncoated, which form the top and bottom of the packaged cell. The first step in manufacturing the cell is to lay down the cathode and cathode collector onto the package, so that the cathode collector is in place on the package. It is helpful to mechanically hold the cell components in place during sealing, so that they do not shift to cause a short or interfere with the sealing process. For example, it is possible to attach the cell components to one of the packaging films using a lightly tacky pressure sensitive film, such as 3M 80 spray adhesive or Krylon Easy-Tack. One may also envision using a mechanical clamp of some fashion to hold the cell components in place during the sealing process. Once the cathode and collector are in place, the cathode is wetted with electrolyte. The cathode may optionally be laminated to a separator prior to cutting; if this is not the case, a piece of separator is mechanically placed on top of the wet cathode, and if necessary more electrolyte is applied.

At this point, the anode, (and optionally the anode collector; the combination may be referred to as the anode assembly) is then added to the cell. If the cathode is not laminated to a separator as described above, the anode assembly may be placed beside the cathode, and separated from the cathode by the separator to prevent electrical shorting. Alternatively, whether or not the cathode is laminated to a separator, the anode assembly may be placed on top of the cathode and separator. In either case, it is preferable for the separator to be wider than the cathode (or, in the case where the cathode is laminated to the separator, equal in width to the cathode), and for the anode assembly to be narrower than the cathode. Once the anode, cathode, and separator are in place, the cell is ready to be sealed, together with the top layer of packaging.

The cell package has two kinds of seals - "feedthroughs," and "sides." Feedthroughs are located on the shorter axes of the cell, while sides are located on the longer axes of the cell (where said axes may be linear, arcuate, or some other shape.) The functional difference between feedthroughs and sides is that sides only need to act as a hermetic seal, while feedthroughs need to act as a hermetic seal and also enable an electrical terminal or terminals to extend through them. If the shorter axis of the cell is very small (for example less than 1.5 mm wide but generally greater than 300 microns wide), sides need to be much narrower than feedthroughs to prevent an unacceptable internal volume loss. In general, the sides may be between 20 µιη wide and 200 µιη wide, dependent on the length of the shorter cell axis. At the same time, it is possible to add material to the thickness of the feedthrough (such as a dry film, coating, or adhesive) to ensure that the feedthrough is hermetic even though it has to go around the current collectors. It is acceptable to have the feedthrough seal occupy a greater length, because of its location on the longer axis of the cell which is generally at least 4 mm long.

Positioning of the electrodes relative to the seams is critical when dealing with such small components. In general, the position of the side seams and electrodes may be within 5% of the width of the battery. For example, for a 1 mm wide battery electrode and side seam positions would have a tolerance of less than about ±0.05 mm. For the length of the battery, the tolerance of the position of the bare part of the terminal which goes through the feedthrough, the feedthrough adhesive, and the feedthrough sealing mechanism may have a tolerance of roughly 25%. For example, for a 1 mm wide seal the positioning may be within ±0.25 mm. Note that the width of the bare terminal (the cathode collector which is not coated with cathode material, and the anode collector which is not covered by the anode) may extend the length of the feedthrough seam.

Thus, different sealing methods are needed for the sides and the feedthroughs. For sealing of the sides, ultrasonic welding is preferred. Prior art ultrasonic welding of plastics takes place with the motion of the ultrasonic horn largely perpendicular to the vector of the seal, and this results in a wide joint which is objectionable. If the oscillation motion of the ultrasonic horn is predominantly in the same plane as the packaging material, a relatively narrower seal may be achieved.

Alternatively, laser welding has been used to produce a seal width of under 40 µιη.

After welding the side seams, it is necessary to cut through the packaging film around the sides in order to separate out the battery package. In some cases, it is possible to simultaneously weld and cut the side seams. For example, it is possible to simultaneously seal and cut plastic films with a seal width of under 50 µιη using ultrasonic welding when the direction of the vibration is nearly parallel with the plane of the packaging material. The vector created by the direction of sealing, which in the case of the side seal is along the length of the battery package. However, in certain cases it may be preferable to seal the side seams in a first step, and then use another step to remove the packaged cell from the packaging film. This second step may utilize waterjet cutting, ultrasonic cutting, laser-cutting, tool-die degating, or the like.

For the feedthrough, it is necessary to completely close off the package around the current collector that extend through the packaging. Because the active materials do not extend into the feedthrough area, it is possible to add appreciable thickness to the packaging within this area. For example, for a cell which is 250 microns thick with 25 micron packaging, roughly 200 microns of material may be added to the feedthrough area to enhance sealing.

A first alternative is to coat the current collectors and/or the packaging with a polymer latex, such as Dow Hypod, Mitsui Chemipearl, Aquaseal X 2088, or Joncryl prior to heat sealing. Another alternative is to add a dry polymer film, such as is manufactured by Fastel, to the seal area. A heat sealable polymer may also be applied (for example, by screen printing) to the inner surface of the packaging as a dispersion. Yet another alternative is to apply a tacky film, such as Asphalt, Conseal 1400 (Fujifilm Hunt), or Henkel PM040 to the packaging and/or current collectors in the feedthrough area to enhance heat-sealing, or apply a curable thermoset adhesive, such as a two-part adhesive, a heat-cured adhesive, or a UV-cured adhesive, in the feedthrough area. For some embodiments, it may be necessary to cut through the adhesive for the feedthrough while welding the sides; this may be accomplished by ultrasonic welding, which is known to remove contamination from the weld area. This is because it is necessary for the feedthrough seal to seal around the terminals of the cell, without any gaps.

In some cases, the feedthrough adhesive (polymer latex, heat seal film, tacky film, or thermoset adhesive) may be applied before the pressure sensitive adhesive described above, and in some cases it may be applied after, depending on the properties of the heat seal adhesive. In the case of using a curable adhesive, once the heat seal adhesive is in place, the sides of the cell may be sealed using a technique such as ultrasonic welding or laser welding using a fixture to substantially exclude electrolyte from the side seal, followed by curing the adhesive in place to create the feedthrough.

### Example 4

To reduce the ingress of water into or out of the cell, the osmotic pressure difference between the cell and its surroundings may be reduced. The osmotic pressure may be approximated using the Morse Equation, P =∑ inMnRT, where P is the osmotic pressure, T is the absolute temperature, R is the ideal gas constant, Mn is the concentration in moles per liter of the nth component of the mixture, and in is the number of ions per formula unit obtained upon dissolution of the nth component of the mixture. The difference in osmotic pressure between two solutions may be expressed as the difference in P, as defined above. Preferably, this difference may be less than 25 atmospheres, or more preferably less than 11 atmospheres.

We prepared an electrolyte solution of 25 wt% zinc acetate and 0.2 wt% ammonium acetate with the balance comprising de-ionized water (referred to as the "stock solution"). We also produced two diluted electrolyte solution which may be referred to as the 6.25% zinc acetate solution (1 :3 ratio from stock solution) and 1.8% zinc acetate solution (1 :13 ratio from stock solution). The solution which the battery is stored in proximity to is a saline solution with a composition of 0.824% sodium chloride, 0.893%) boric acid, 0.23% sodium borate, and 0.01% sodium ethylenediamine tetraacetate (EDTA) by weight, with the balance comprising de-ionized water; this may henceforth be referred to as "packing solution." An additional electrolyte was made comprising 0.822% sodium chloride, 1.463% boric acid, and 0.011% sodium borate by weight, which may henceforth be referred to as "modified packing solution." The osmotic pressure relative to the packing solution as calculated using the Morse Equation is given below in Table 4.

### Test Results for Different Solutions

Cells were prepared to establish performance of the various electrolytes. Each cell used a piece of card stock as a backing to provide stiffness, and the packaging consisted of a 0.001" polyethylene heat-sealable layer on one side, a 48 gauge (0.0005") PET film on the other, and a 0.000316" aluminum foil layer in between the two (Ultra Flex Corporation, Brooklyn, New York). To enable heat sealing of the battery, pieces of dry heat sealable polymer film (Fastel Adhesives & Substrate Products) were used, with a window of 9 mm x 1 mm cut out of one piece within the cell to hold the battery components. The anode was cut out of 0.075 mm thick zinc using an Epilog Fibermark laser; said anode was comprised of a strip which was 0.25 microns wide. The cathode was prepared as described earlier with a composition of 85% Mn02, 10% carbon black, and 5% PTFE by weight. The cathode was laminated to a cut titanium piece as described above. For these tests, the cathode was 400 µιη ±5% wide x 130 µιη ±5% thick x 8.5 mm ± 0.5 mm long. The anode and cathode were placed into the window in the dry heat sealable film such that they were not in physical contact with each other.

To fill the cells, electrolyte was added to wet the cathode. Gelled electrolytes prepared by mixing the electrolytes above with between 1.8 and 5% by weight Walocel GA07 (Dow Chemical Company) were added to fill the window within the dry film, and the cell was packaged using heat sealing, with packaging film on both sides of the cell. The cells were tested using a VMP3 (Bio-Logic) with a test protocol of a 20 µA constant current discharge down to a cutoff voltage of 0.9V. The internal resistance was measured as the voltage drop obtained from an initial 20 µA pulse lasting three seconds prior to discharging the battery.

In addition to electrochemical data, gassing data were obtained to semi-quantitatively establish projected shelf life in the various electrolytes. Gassing was obtained by cutting 0.075 mm thick zinc into 0.13 mm wide strips using an Epilog Fibermark laser, which were added to glassware designed to obtain gassing rates. This glassware consists of a volumetric flask filled with electrolyte solution, which is in contact with the zinc strips. This flask is sealed with a wax-coated glass stopper. A graduated section is attached and open to the neck of the volumetric flask, with an opening exposed to ambient atmosphere; when hydrogen gas is evolved it collects below the wax-filled section, which forces electrolyte up into the graduated section, allowing the gassing rate to be determined by measuring the position of the electrolyte in the graduated section at different times. The wide portion of the flask was held in a heated bath held at 45 °C, and the gassing rate was determined based on the rise in electrolyte in the graduated section. Because zinc corrosion is one of the major factors impacting shelf life in carbon-zinc batteries, the gassing rate may be taken as a proxy for shelf life assuming that zinc corrosion is the main factor limiting shelf life. Data is summarized in Table 3 below. As the cathode is the electrode limiting capacity, data are normalized volumetrically to a cathode size of 400 µιη x 8 mm x 130 µιη. Each data point is the average of ten cells tested. Notably, for those solutions containing zinc acetate the pH increases with decreasing concentration, while gassing rate decreases, and a substantial capacity is retained. Furthermore, gassing is low in packing solution and modified packing solution, even in the absence of zinc.

**TABLE 3**

| Electrolyte | pH | Open-circuit voltage | Resistance, Ω | Osmotic pressure, atmospheres | Capacity, µA-h | Gassing rate, mL/g-day |
|---|---|---|---|---|---|---|
| Stock solution | 5.94 | 1.530 | 1080 | 75 | 180 | 0.798 |
| 6.25% Zinc acetate solution | 6.27 | 1.518 | 1312 | 10 | 160 | 0.521 |
| 1.8% Zinc Acetate Solution | 6.79 | 1.511 | 2431 | -5.0 | 90 | 0.500 |
| Packing Solution | 7.52 | 1.419 | 5040 | 0 | 80 | 0.158 |
| Modified Packing Solution | 6.04 | 1.513 | 2840 | 1.8 | 120 | 0.189 |

### Exemplary Component Compositions

A wide variety of compositions may be used in the electrochemical battery cell. Any combination of components would be selected for electrochemical compatibility, and for the ultimate use of the electrochemical cell. For example if biocompatibility is required, components would be thus selected.

Approval of medical devices by regulatory agencies require that a biocompatibility assessment be conducted to assure safety of the device or material Biocompatibility classification is thus obtained by testing according to certain guidelines, including ISO .10993, "Biological Evaluation of Medical Devices," and the japan Ministry of Health, Labour and Welfare (MHLW) 'Testing Methods to Evaluate Biological Safety of Medical Devices," Notice from the Office Medical Devices. The testing of the biocompatibility of a device is intended to demonstrate that the device may not, either directly or through the release of its materia] constituents: (i) produce adverse local or systemic effects; (ii) be carcinogenic; or (iii) produce adverse reproductive and developmental effects. Some materials have been well characterized chemically and physically in the published literature and in the marketplace and have a long history of safe use. Such materials may be considered biocompatible and are thus preferred. Materials that are used in medical device batteries may affect a human eye by touch, leak from the battery due to, for example, an accident or an improper sealing of the battery. Use of biocompatible materials minimizes any risk of such complications occurring if the leaking or leached materials make contact with the eye or other human tissues.

The anode is the electrode component which is oxidized in the electrochemical battery reaction. In one embodiment, the anode comprises zinc as the active component in the form of a contiguous wire or thin cylinder. The zinc is preferably battery grade in that it is free from impurities generally understood by those skilled in the art to promote corrosion and other undesirable side reactions in the battery. The zinc may also be alloyed with alloys such as bismuth, indium, calcium, or aluminum to increase shelf life. Lead in small amounts has also been shown to be an effective zinc alloy material. Although thought of as non-biocompatible, the lead stays within the zinc grain boundaries and is not dissolved in the electrolyte. Thus, such added lead may not create a biocompatibility issue. The anode wire also acts to collect the electrons flowing from the anode and transport them out of the electrochemical battery cell. To accomplish this dual role, excess anode is preferably added to the battery to ensure the anode remains contiguous. Zinc powder may be used as an alternative anode material as is shown in Example 2.

The cathode is the electrode component which is reduced in the electrochemical battery reaction, and when the electrochemical battery cell is placed in a circuit with a load, the cathode attracts electrons from the circuit. The preferred cathode material may be manganese dioxide which is mixed with a conductor additive and binder to form a cathode mix. It may be preferable to include as much manganese dioxide in the cathode mix to maximize the capacity of the electrochemical battery cell and to reduce the necessary size of the cathode. The amount of cathode in the electrochemical battery cell is determined relative the anode and its active amount. The molar amounts of each the anode and cathode are determined so that the cell reaction may be accomplished for the desired duration. The form of the cathode is planar in one embodiment, but may be cylindrical in an alternative embodiment. The cylindrical cathode may be extruded or otherwise shaped while being formed.

The conductor is used to enable electron flow between cathode particles and from and to the cathode current collector. The amount of conductor is preferably minimized to accomplish this task as there is little benefit to adding excess conductor. Conductors appropriate are graphite, expanded graphite, acetylene black, carbon black, and other conductors known by those skilled in the art. Preferably acetylene black is used in the present invention as it provides the cathode mix a desired level of electrolyte absorptivity.

Binder is used in the cathode mix to provide structure to the cathode throughout the electrochemical battery cell life. The binders ability to provide this structure may not be altered by the electrolyte or by the expansion of the manganese dioxide. Preferred binders include particulate Teflon® (PTFE) emulsion which may be fibrillated during mixing of the cathode mix.

The cathode mix electrically communicates with the cathode collector, and the purpose of the cathode collector is to both electrically communicate electrons to and from the cathode but to also provide structure to the electrochemical battery cell. A titanium wire is the preferred structure for the cathode collector as it adequately conducts and has the required rigidity in small diameters. Titanium mesh, titanium ribbon, expanded mesh, braided wire all are alternative cathode collector materials.

Electrolyte is selected for compatibility with the reactive electrode materials. For the zinc anode and a manganese dioxide cathode, a LeClanche electrolyte, or ammonium chloride NH4Cl solution, zinc chloride ZnCl, zinc acetate and mixture thereof, are one embodiment. For dilute solutions, acetate electrolytes, which contain zinc acetate and optionally other acetates such as ammonium acetates, are preferred due to zinc chloride's solubility behavior. Salines, such as sodium chloride NaCl, magnesium chloride MgCl2 and potassium chloride KCl solutions together with additives such as sodium borate, boric acid and sodium ethylenediamine tetraacetate may alternatively be used. For the gelled electrolyte, carboxymethyl cellulose, agar, or an alternative gelling agent may be used. The gelling agent is to increase the viscosity of the electrolyte so that it remains within the cell at a location where it is useful, namely between the anode and cathode.

The gelled electrolyte may be located throughout the cell interior of the electrochemical battery cell, and is most preferably located between the anode and cathode which are disposed relative each other by a predetermined distance. This predetermined distance may be calculated by those skilled in the art, but the distance may allow for tolerances necessary to prevent short circuits caused by the anode and cathode coming in contact with each other. As there is no separator or other physical barrier between the electrodes, a practical distance is necessary in this embodiment. The gelled electrolyte viscosity does act to hinder movement of the electrodes and its placement between the electrodes both acts to enable ionic communication and to prevent movement of the electrodes towards each other. The gelled electrolyte may also enhance biocompatibility, by providing a physical barrier around the electrodes. Particles moving from the electrodes are caught in the gelled electrolyte and prevented from moving away from the electrochemical battery cell or towards the other electrode. In another embodiment a thin barrier may be placed between the anode and cathode to prevent relative contact. The thin barrier may be made of a separator material or an ionically conductive and electronically insulating material.

An anode tab may be mechanically connected to the anode so that it may electrically transport created electrons from the anode to the negative terminal of the electrochemical battery cell. Using an extension of zinc wire for this purpose may corrode or otherwise affect biocompatibility. Therefore titanium or other corrosive resistive conductive materials are appropriate to extend the anode through any packaging material to provide the required external electron conduit.

The electrochemical battery cell may be enclosed in a packaging material to enclose the cell components to enhance shelf life, restrict ionic, oxygen, and water migration into and out of the cell, and to ensure biocompatibility. As the packaging material is inert and plays no role in the performance of the battery, minimizing the thickness and amount of the material is preferred. A material that is inert and does not interfere with the cell reactions is also preferred as is a material that is easily formed into a contiguous exterior around the entire electrochemical battery cell while enabling sealing of the terminal electrodes which necessarily penetrate the packaging and protrude from the packaging. The packaging material is also preferably easily formed and sealed by high speed manufacturing processes. Pigmentation of the packaging material may also be desired and this requirement may inform the packing material selection.

Polypropylene may be preferred as a packaging material in that it may be easily weldable via a variety of processes including heat, ultrasonic and laser welding. In addition, polypropylene may be adhesive - bondable and available in a variety of thicknesses and densities. In addition, polypropylene may be impervious to the preferred electrolyte compositions and may contribute to biocompatibility. Alternative biocompatible polymers such as polyurethane, polyvinylpyrrolidone, silicone elastomers, polyethylene, polytetrafluoro ethylene, poly-(p-phenyleneterephthalamide), polyvinyl chloride, polypropylene, polyolefins, polyesters, polyacrylates (including polymethacrylates).

The battery exterior or the exterior surface of the packaging material may also be coated to further render it biocompatible. Appropriate biocompatible coatings may include phosphorylcholine and poly-para-xylylenes, such as paralene C.

The coated film used as a packaging material may serve at least two barrier functions, in addition to acting to maintaining the physical integrity of the battery. The film may prevent migration of salt ions, to prevent the loss of electrolyte ions in the event that the battery is surrounded by liquid. The film may also retard water transport, to prevent swelling of the battery. For the case where the battery is enclosed in a sealed package prior to use, the prevention of oxygen transport is not a critical need; however, those skilled in the art will recognize that the same sorts of coatings used to retard moisture transport may also substantially retard oxygen transport.

Within the packaging industry, permeability to water of a material or device is normally measured by subjecting one side of a barrier film to a given relative humidity while keeping the other side dry, for example by purging with dry gas, while maintaining a constant temperature, and measuring the water transmitted across the film from the side with controlled relative humidity to the dry side expressed in terms of water vapor transmission rate (WVTR), with units of mass/area*time at a given temperature and relative humidity. For example, the units may be expressed as g/m2-day at temperature in degrees Celsius and relative humidity.

For the preferred embodiment, the WVTR of the packaging may be less than 1 g/m2-day, or more preferably less than 0.1 g/m2-day, or still more preferably less than 0.02 g/m2-day, where said WVTR is measured at between 85 and 100% Relative Humidity and between 20°C and 40°C. Instruments for performing such tests are available from, for example, MOCON Inc. (Minneapolis, MN)

It may be noted, however, that conventional WVTR measurements may only measure moisture transport normal to the barrier film, i.e. through whatever barrier coating may be present. Given a sealed package, however, it is possible for moisture to transport through the seam, i.e. parallel to the plane of the barrier film. This may be especially relevant where the seam of the package is particularly narrow, for example less than 100 microns wide. Thus, the barrier property of the polymer film itself, rather than the coating, dominates the transport behavior of the side seam, which may make a nontrivial contribution to overall moisture transport into and out of the battery particularly for very small batteries, for example those with a package having a surface area of 0.5 cm2 or less. Therefore, it is preferable for the WVTR of the polymer to be less than 10 g/m2-day, or more preferably less than 5 g/m2-day at a thickness of 25 microns, a temperature between 20°C and 40°C, and a relative humidity between 85 and 100%.

Sealing methods for the packaging material include the described ultrasonic and laser beam welding. Alternative sealing methods include heat welding and the use of biocompatible adhesives.

### Additional Electrolyte Formulations

In some examples, an improvement in gassing of microbatteries may be obtained by using more highly purified chemicals (substituting 99.99% pure zinc acetate for 98% pure zinc acetate in our electrolyte formulation.) Additional improvements may be obtained by adding zinc chloride to a zinc acetate based electrolyte which may also increase battery capacity significantly. In some examples, this may be because of the enhanced utilization of water and/or the reduced water content in the discharge products when zinc chloride is incorporated into the electrolyte.

### Polymer Package Mechanical Integrity

In some examples, a dry polymer film adhesive may provide a reproducible, mechanically strong bond with convenient manufacturing. In some examples, further improvement may be obtained by using a heat sealable tape, comprised of polypropylene or modified polypropylene on both sides of a polyester core. Such materials may be applied in place of dry heat sealable polymer film. In some examples a tape used to adhere terminals of lithium-ion batteries to polypropylene heat sealable packaging, available from Targray may be used. This tape may provide a reproducible, strong mechanical bond between the current collectors and the polypropylene film packaging.

An alternative dry heat sealable tape example may include a tape intended for adhering lithium ion battery terminals to polypropylene packaging. This tape may be obtained from MTI, For each of the exemplary heat sealable tapes, it may be possible to ultrasonically seal the sides of the package through the tape prior to heat sealing the terminals, such that the sides of the cell were joined together including in the region with the heat sealable tape.

The bond between the heat sealable tape and the packaging film may be improved by adjusting conditions for etching of the titanium used in the electrode contacts. In some examples, it may be useful to etch titanium by immersing it for ten minutes in a boiling solution of 10 weight percent oxalic acid in water. In some other examples, two additional protocols for etching-a hydrofluoric acid based etch, and a hydrogen peroxide based etch; may provide enhanced adhesion of titanium to polypropylene. In some examples, improvement in bonding may be determined by a burst test (weight was placed on a heat sealed polypropylene package with one of the sides having a piece of the etched titanium with the aforementioned heat sealable tape positioned on both sides of the titanium between the titanium and the plastic packaging).

In some examples, Titanium foil may be cleaned by wiping its surface with isopropanol,.The resulting cleaned foil may then be placed onto a series of plastic rods on a perforated substrate. The foil may be immersed in a pickling solution containing 35 g/L 40 wt% hydrofluoric acid, 23.6 g/L sodium sulfate, and 350 g/L concentrated nitric acid, with the balance water. Subsequently, the titanium may be rinsed with tap water. Then, the etched titanium may be placed in a phosphate conversion bath comprised of 53 g/L trisodium phosphate, 21 g/L potassium fluoride, and 32 g/L 40% hydrofluoric acid solution for approximately two minutes for example. The titanium may then be rinsed and placed in a vessel filled with de-ionized water in a water bath held at 65 °C for a time period such as fifteen minutes. The titanium may then be removed from the bath and dried in a drying oven prior to use.

In some examples, a hydrogen peroxide based etch may be performed with a modified RAE etch¹. The chemical composition of the etch formulations may be varied, for example where etching solutions may be formed with 2% by weight sodium hydroxide, and 1%, 2%, or 3% by weight of hydrogen peroxide, with the balance de-ionized water. Subsequently, the solution may next be held in a beaker in a water bath maintained at 60 °C. Titanium foil may next be wiped with isopropanol for cleaning, and then racked onto a series of plastic rods on a perforated substrate. The foil may then be etched in one of the solutions for 5-20 minutes, then removed and rinsed with de-ionized water. The cleaned foil may next be allowed to dry in an oven.

Superior bonding conditions may be observed by electrochemical testing performed by holding a sample of cleaned/etched titanium foil at 1.55V against a piece of zinc foil in an electrolyte solution including approximately 6.25% zinc acetate, 0.5% ammonium acetate, and 10 ppm In³⁺ added as indium sulfate.) It may be noted that the titanium etched with 1 % hydrogen peroxide as described may draw significantly less current than unetched titanium. This may perhaps be due to a formation of an oxide layer on the titanium surface during the hydrogen peroxide etch, which may be called anodization.

In some examples, a titanium current collector may be modified in the region where it is heat sealed resulting in improvements of the mechanical integrity of the heat seal. In some examples, the improvement may enables staking of heat seal tape through the battery, reinforcing it. In some examples, the results of modification by cutting holes in the terminus of the electrodes may be tested by manually pressing on packaged cells near the cathode terminal using a metal poking tool. In some examples, qualitatively improved strength may be observed for cells with two types of perforated cathode titanium current collectors than with unperforated titanium cathode current collectors. The cells with the perforated current collectors remained intact, while the cells with the unperforated current collectors leaked electrolyte when pressed. This may imply that the mechanical integrity of a battery cell package may be enhanced by the perforation, which may lead to increased shelf life.

### Filling and Sealing Methods

As mentioned previously, one may use ultrasonic welding to exclude electrolyte from a side seal. Also noted was the possibility of using laser welding with an appropriate fixture to accomplish a similar result. In some configurations, however, the use of ultrasonic welding to seal a wet cell (a cell with electrolyte present) may be problematic. The cell may not be able to seal completely. Perhaps this may be because of an interaction of the ultrasonic energy from the horn with the electrolyte within a small, enclosed space creating localized pressure variations which may damage the seal, particularly around the terminals.

In some examples, improvement may be achieved by changing from a one-stage weld to a two-stage weld. In such an example, where the majority of the cell perimeter was welded for a dry cell using heat seals for the ends and an ultrasonic seal on the perimeter, the cell was filled, and then the remaining small open portion of the cell perimeter was sealed ultrasonically. Then the cell may be degated, and the leads cleared of excess plastic flow from heat sealing using a small knife.

### Use of Adhesives to Hold Components in Alignment

In some examples, it may be helpful to temporarily hold components in place, so that they do not move out of alignment in subsequent steps. While mechanical clamping may be a solution, this may have an issue in that it requires gripping in multiple locations, and requires special fixturing for each step. In some examples, a solution may involve using pressure sensitive adhesives, such as 3M 75 to hold components in place. In some examples, using a mixture of 0.5 wt% sodium carboxymethylcellulose (Walocel 2000 GA 07, Dow) may help to ensure that the cathode, separator, and anode are aligned with each other when stacked, while still enabling electrolyte conduction.

In some examples, the solution may also include using very small dots of nonconductive pressure sensitive adhesive (3M 75) between layers. The adhesives may be applied by any number of conventional methods, such as brushing or spraying as an aerosol (for example, using a preformulated aerosol can or using a conventional airbrush), with the use of a template or stencil if necessary.

### Improved Package Barrier Strength and Mechanical Strength Through Electroless Plating

In some examples, a narrow side seam in the battery package may create a region with poor barrier properties, enabling the transport of moisture and gaseous species into and out of the cell. Conventional batteries packaged in laminates ("pouch cells") may have much wider seams on all sides. For example, the side seal of a pouch cell may be larger than the entire width of a micro-battery (2-4 mm per side, *vs* under ∼1 mm width for a micro-battery). The wider seams, which may not be possible to incorporate in a small micro-battery, may act as an effective moisture and gas barrier due to width. Thus, an alternative solution is needed for barrier strength with very narrow seams.

In some examples, a solution may involve overcoating the micro-batteries with a conformal barrier layer using electroless plating. There may be a range of techniques available for creating a conformal hermetic barrier coating. Overcoating a miniaturized carbon-zinc batteries, however, may present special challenges. The presence of moisture within the battery electrolyte combined with the imperfect barrier properties of the package may mean that there may be a continual flux of moisture through the packaging to the surface of the battery. This flux may act to contaminate the surface. Furthermore, the imperfect packaging may enable outflow of moisture. Furthermore, limits may be imposed by the melting point of the plastic packaging (roughly 160 °C for polypropylene) which may limit the temperate possible for any coating method.

Vacuum techniques such as sputter deposition and thermal evaporation which require a clean surface for deposition may also be inferior for overcoating micro-batteries due to the continual flux of moisture to the surface. And, atomic layer deposition may be unsuitable for the same reason. Other techniques such as sol gel coating and chemical vapor deposition may require exposure to temperatures which may damage the battery.

In some examples, a desirable solution for improving barrier effectiveness and mechanical strength may involve electroless plating as a technique for creating a conformal barrier coating. Electroless plating is a conventional technique, which can deposit a conformal metal layer onto a conducting or nonconductive coating. Electroless plating baths have been developed for depositing metals such as nickel, copper, and tin onto plastic surfaces. The electroless plated metal may then be further plated using electroless plating or electroplating with a wide variety of metals, including nickel, copper, tin, gold, silver, cadmium, and rhodium. In some cases, because of cost, corrosion, and/or mechanical concerns, it may be desirable to use a layered structure incorporating more than one electroplate layer.

The coating may be made arbitrarily thick, and may mechanically reinforce the battery in addition to acting as a barrier. This mechanical reinforcement may force hydrogen out the sides of the cell, reducing or eliminating bulging due to hydrogen gas generation during zinc corrosion. To avoid the creation of a short circuit between the battery terminals due to plating, it may be necessary to mask one or both terminals using a nonconductive material during the plating process.

In some examples a layer may be formed with electroless plating where electroless plating and/or electroplating may be used to create a roughly 1 mil (25 microns) conformal copper coating on them. Platers' tape may be used to mask both terminals of these batteries during plating to avoid short circuiting the batteries during the plating processing.

The tape may next be removed from the terminals, and then the batteries may be aged at room temperature at 50% relative humidity. In order to make a comparison similar cells which had not been copper plated were aged under the same conditions. The cells were intermittently monitored by having their open-circuit voltage measured and their resistance established by passing three pulses of 20 µA for 100 milliseconds. The cells may be deemed to have failed when their resistance was over 20 kΩ, as compared to under 5 kΩ for a fresh cell. The electroless plated cells may show significant improvement in lifetime over comparison non-plated cells.

### Anode reinforcement:

In some examples, it may be observed that when sealing micro-battery cells, the anode can bend, resulting in corrosion. To remedy this, In some examples the anode may be reinforced by bonding it to titanium foil using a conventional epoxy (JB-Weld plastic adhesive.)

### Water Reservoir Features

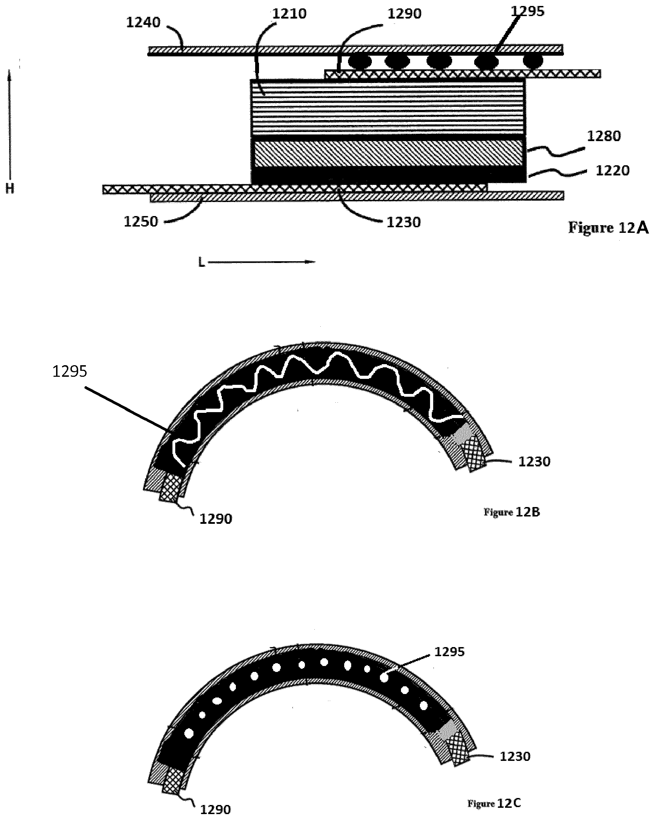

In some examples of flexible microbattery chemistry, the aqueous electrolyte may include water that is consumed in the electrochemical action of the battery. As the water is consumed, the battery may dry out. Referring to Fig. 12A a cross section of an exemplary battery is illustrated. The exemplary battery may have similar diversity in structure as have been described. The battery may have a cathode contact 1290, and anode contact 1230, an anode 1220 a separator 1280, a cathode 1210 and a first flexible layer 1240 and a second flexible layer 1250. In addition there may be water reservoir features 1295. In some examples, deposits of hydrogel material 1295 may be formed upon various portions of the battery structure such as on the cathode contact as illustrated, or in regions adjacent to the cathode or the separator as examples. Hydrogel may swell when exposed to electrolyte and effectively create a store of water that may be passed onto the cathode as the cathode dries out during operation. In some examples, the hydrogel may be deposited as a simple layer, in other examples it may be printed to have a duty cycle to allow for swelling to not significantly add to the dimensions of the battery cell. Referring to Fig. 12B, a top down view illustrates the cathode contact 1290 the anode contact 1230 as well as a linear example of a hydrogel deposit 1295. Referring to Fig. 12C, the hydrogel deposit may be illustrated as circular regions of hydrogel printed to various regions of the micro-battery. In some examples, hydrogel monomer may be spray coated upon battery features with optional masking layers as appropriate. In other examples, an additive manufacturing apparatus such as an Optomec multi-axis printer may print hydrogel features upon the battery components. During filling process of the electrolyte the hydrogel will swell an amount based upon the formulation of the hydrogel. In some examples as water diffuses out of the hydrogel regions into the cathode and separator regions, the void space may allow some room for gasses evolved in the battery to fill in the space.

### Exemplary Biomedical Device Construction with Biocompatible Energization Elements

An example of a biomedical device that may incorporate the energization elements, batteries, of the present invention may be an electroactive focal-adjusting contact lens. Referring to Fig. 1A, an example of such a contact lens insert may be depicted as contact lens insert 100. In the contact lens insert 100, there may be an electroactive element 120 that may accommodate focal characteristic changes in response to controlling voltages. A circuit 105, to provide those controlling voltage signals as well as to provide other functions such as controlling sensing of the environment for external control signals, may be powered by a biocompatible battery element 110. As depicted in Fig. 1A, the battery element 110 may be found as multiple major pieces, in this case three pieces, and may include the various configurations of battery chemistry elements as has been discussed. The battery elements 110 may have various interconnect features to join together pieces as may be depicted underlying the region of interconnect 114. The battery elements 110 may be connected to a circuit element 105 that may have its own substrate 115 upon which interconnect features 125 may be located. The circuit 105, which may be in the form of an integrated circuit, may be electrically and physically connected to the substrate 115 and its interconnect features 125.

Referring to Fig. 1B, a cross sectional relief of a contact lens 150 may comprise contact lens insert 100 and its discussed constituents. The contact lens insert 100 may be encapsulated into a skirt of contact lens hydrogel 155 which may encapsulate the contact lens insert 100 and provide a comfortable interface of the contact lens 150 to a user's eye.

### Electrical Requirements of Microbatteries

Another area for design considerations may relate to the electrical requirements of the device, which may be provided by the battery. In order to function as a power source for a medical device, an appropriate battery may need to meet the full electrical requirements of the system when operating in a non-connected or non-externally powered mode. An emerging field of non-connected or non-externally powered biomedical devices may include, for example, vision-correcting contact lenses, health monitoring devices, pill cameras, and novelty devices. Recent developments in integrated circuit (IC) technology may permit meaningful electrical operation at very low current levels, for example, picoamps of standby current and microamps of operating current. IC's may also permit very small devices.

Microbatteries for biomedical applications may be required to meet many simultaneous, challenging requirements. For example, the microbattery may be required to have the capability to deliver a suitable operating voltage to an incorporated electrical circuit. This operating voltage may be influenced by several factors including the IC process "node," the output voltage from the circuit to another device, and a particular current consumption target which may also relate to a desired device lifetime.

With respect to the IC process, nodes may typically be differentiated by the minimum feature size of a transistor, such as its "so-called" transistor channel. This physical feature, along with other parameters of the IC fabrication, such as gate oxide thickness, may be associated with a resulting rating standard for "turn-on" or "threshold" voltages of field-effect transistors (FET's) fabricated in the given process node. For example, in a node with a minimum feature size of 0.5 microns, it may be common to find FET's with turn-on voltages of 5.0V. However, at a minimum feature size of 90 nm, the FET's may turn-on at 1.2, 1.8, and 2.5V. The IC foundry may supply standard cells of digital blocks, for example, inverters and flip-flops that have been characterized and are rated for use over certain voltage ranges. Designers chose an IC process node based on several factors including density of digital devices, analog/digital mixed signal devices, leakage current, wiring layers, and availability of specialty devices such as high-voltage FET's. Given these parametric aspects of the electrical components, which may draw power from a microbattery, it may be important for the microbattery power source to be matched to the requirements of the chosen process node and IC design, especially in terms of available voltage and current.

In some examples, an electrical circuit powered by a microbattery, may connect to another device. In non-limiting examples, the microbattery-powered electrical circuit may connect to an actuator or a transducer. Depending on the application, these may include a light-emitting diode (LED), a sensor, a microelectromechanical system (MEMS) pump, or numerous other such devices. In some examples, such connected devices may require higher operating voltage conditions than common IC process nodes. For example, a variable-focus lens may require 35V to activate. The operating voltage provided by the battery may therefore be a critical consideration when designing such a system. In some examples of this type of consideration, the efficiency of a lens driver to produce 35V from a 1V battery may be significantly less than it might be when operating from a 2V battery. Further requirements, such as die size, may be dramatically different considering the operating parameters of the microbattery as well.

Individual battery cells may typically be rated with open-circuit, loaded, and cutoff voltages. The open-circuit voltage is the potential produced by the battery cell with infinite load resistance. The loaded voltage is the potential produced by the cell with an appropriate, and typically also specified, load impedance placed across the cell terminals. The cutoff voltage is typically a voltage at which most of the battery has been discharged. The cutoff voltage may represent a voltage, or degree of discharge, below which the battery may not be discharged to avoid deleterious effects such as excessive gassing. The cutoff voltage may typically be influenced by the circuit to which the battery is connected, not just the battery itself, for example, the minimum operating voltage of the electronic circuit. In one example, an alkaline cell may have an open-circuit voltage of 1.6V, a loaded voltage in the range 1.0 to 1.5V, and a cutoff voltage of 1.0V. The voltage of a given microbattery cell design may depend upon other factors of the cell chemistry employed. And, different cell chemistry may therefore have different cell voltages.

Cells may be connected in series to increase voltage; however, this combination may come with tradeoffs to size, internal resistance, and battery complexity. Cells may also be combined in parallel configurations to decrease resistance and increase capacity; however, such a combination may tradeoff size and shelf life.

Battery capacity may be the ability of a battery to deliver current, or do work, for a period of time. Battery capacity may typically be specified in units such as microamp-hours. A battery that may deliver 1 microamp of current for 1 hour has 1 microamp-hour of capacity. Capacity may typically be increased by increasing the mass (and hence volume) of reactants within a battery device; however, it may be appreciated that biomedical devices may be significantly constrained on available volume. Battery capacity may also be influenced by electrode and electrolyte material as well as other factors such as the physical design of the electrodes, the nature and dimensions of any separator material disposed between the electrodes and the relative proportions of anode, cathode active materials, conductive aids and electrolyte.

Depending on the requirements of the circuitry to which the battery is connected, a battery may be required to source current over a range of values. During storage prior to active use, a leakage current on the order of picoamps to nanoamps may flow through circuits, interconnects, and insulators. During active operation, circuitry may consume quiescent current to sample sensors, run timers, and perform such low power consumption functions. Quiescent current consumption may be on the order of nanoamps to milliamps. Circuitry may also have even higher peak current demands, for example, when writing flash memory or communicating over radio frequency (RF). This peak current may extend to tens of milliamps or more. The resistance and impedance of a microbattery device may also be important to design considerations.

Shelf life typically refers to the period of time which a battery may survive in storage and still maintain useful operating parameters. Shelf life may be particularly important for biomedical devices for several reasons. Electronic devices may displace non-powered devices, as for example may be the case for the introduction of an electronic contact lens. Products in these existing market spaces may have established shelf life requirements, for example, three years, due to customer, supply chain, and other requirements. It may typically be desired that such specifications not be altered for new products. Shelf life requirements may also be set by the distribution, inventory, and use methods of a device including a microbattery. Accordingly, microbatteries for biomedical devices may have specific shelf life requirements, which may be, for example, measured in the number of years.

In some examples, three-dimensional biocompatible energization elements may be rechargeable. For example, an inductive coil may also be fabricated on the three-dimensional surface. The inductive coil could then be energized with a radio-frequency ("RF") fob. The inductive coil may be connected to the three-dimensional biocompatible energization element to recharge the energization element when RF is applied to the inductive coil. In another example, photovoltaics may also be fabricated on the three-dimensional surface and connected to the three-dimensional biocompatible energization element. When exposed to light or photons, the photovoltaics will produce electrons to recharge the energization element.

In some examples, a battery may function to provide the electrical energy for an electrical system. In these examples, the battery may be electrically connected to the circuit of the electrical system. The connections between a circuit and a battery may be classified as interconnects. These interconnects may become increasingly challenging for biomedical microbatteries due to several factors. In some examples, powered biomedical devices may be very small thus allowing little area and volume for the interconnects. The restrictions of size and area may impact the electrical resistance and reliability of the interconnections.

In other respects, a battery may contain a liquid electrolyte which could boil at high temperature. This restriction may directly compete with the desire to use a solder interconnect which may, for example, require relatively high temperatures such as 250 degrees Celsius to melt. Although in some examples, the battery chemistry, including the electrolyte, and the heat source used to form solder based interconnects, may be isolated spatially from each other. In the cases of emerging biomedical devices, the small size may preclude the separation of electrolyte and solder joints by sufficient distance to reduce heat conduction.

### Modular Battery Components

In some examples, a modular battery component may be formed according to some aspects and examples of the present invention. In these examples, the modular battery assembly may be a separate component from other parts of the biomedical device. In the example of an ophthalmic contact lens device, such a design may include a modular battery that is separate from the rest of a media insert. There may be numerous advantages of forming a modular battery component. For example, in the example of the contact lens, a modular battery component may be formed in a separate, non-integrated process which may alleviate the need to handle rigid, three-dimensionally formed optical plastic components. In addition, the sources of manufacturing may be more flexible and may operate in a more parallel mode to the manufacturing of the other components in the biomedical device. Furthermore, the fabrication of the modular battery components may be decoupled from the characteristics of three-dimensional (3D) shaped devices. For example, in applications requiring three-dimensional final forms, a modular battery system may be fabricated in a flat or roughly two-dimensional (2D) perspective and then shaped to the appropriate three-dimensional shape. In some examples, the battery may be small enough to not perturb a three dimensional shape even if it is not bent. In some other examples, a coupling of multiple small batteries may fit into a three dimensionally shaped space. A modular battery component may be tested independently of the rest of the biomedical device and yield loss due to battery components may be sorted before assembly. The resulting modular battery component may be utilized in various media insert constructs that do not have an appropriate rigid region upon which the battery components may be formed; and, in a still further example, the use of modular battery components may facilitate the use of different options for fabrication technologies than might otherwise be utilized, such as, web-based technology (roll to roll), sheet-based technology (sheet-to-sheet), printing, lithography, and "squeegee" processing. In some examples of a modular battery, the discrete containment aspect of such a device may result in additional material being added to the overall biomedical device construct. Such effects may set a constraint for the use of modular battery solutions when the available space parameters require minimized thickness or volume of solutions.

### Battery Element Separators

Batteries of the type described in the present invention may utilize a separator material that physically and electrically separates the anode and anode current collector portions from the cathode and cathode current collector portions. The separator may be a membrane that is permeable to water and dissolved electrolyte components; however, it may typically be electrically non-conductive. While a myriad of commercially-available separator materials may be known to those of skill in the art, the novel form factor of the present invention may present unique constraints on the task of separator selection, processing, and handling.

Since the designs of the present invention may have ultra-thin profiles, the choice may be limited to the thinnest separator materials typically available. For example, separators of approximately 25 microns in thickness may be desirable. Some examples which may be advantageous may be about 12 microns in thickness. There may be numerous acceptable commercial separators include micro fibrillated, microporous polyethylene monolayer and/or polypropylene-polyethylene-polypropylene (PP/PE/PP) trilayer separator membranes such as those produced by Celgard (Charlotte, NC). A desirable example of separator material may be Celgard M824 PP/PE/PP trilayer membrane having a thickness of 12 microns. Alternative examples of separator materials useful for examples of the present invention may include separator membranes including regenerated cellulose (e.g. cellophane).

While PP/PE/PP trilayer separator membranes may have advantageous thickness and mechanical properties, owing to their polyolefinic character, they may also suffer from a number of disadvantages that may need to be overcome in order to make them useful in examples of the present invention. Roll or sheet stock of PP/PE/PP trilayer separator materials may have numerous wrinkles or other form errors that may be deleterious to the micron-level tolerances applicable to the batteries described herein. Furthermore, polyolefin separators may need to be cut to ultra-precise tolerances for inclusion in the present designs, which may therefore implicate laser cutting as an exemplary method of forming discrete current collectors in desirable shapes with tight tolerances. Owing to the polyolefinic character of these separators, certain cutting lasers useful for micro fabrication may employ laser wavelengths, e.g. 355 nm, that may not cut polyolefins. The polyolefins do not appreciably absorb the laser energy and are thereby non-ablatable. Finally, polyolefin separators may not be inherently wettable to aqueous electrolytes used in the batteries described herein.

Nevertheless, there may be methods for overcoming these inherent limitations for polyolefinic type membranes. In order to present a microporous separator membrane to a high-precision cutting laser for cutting pieces into arc segments or other advantageous separator designs, the membrane may need to be flat and wrinkle-free. If these two conditions are not met, the separator membrane may not be fully cut because the cutting beam may be inhibited as a result of defocusing of or otherwise scattering the incident laser energy. Additionally, if the separator membrane is not flat and wrinkle-free, the form accuracy and geometric tolerances of the separator membrane may not be sufficiently achieved. Allowable tolerances for separators of current examples may be, for example, +0 microns and -20 microns with respect to characteristic lengths and/or radii. There may be advantages for tighter tolerances of +0 microns and -10 micron and further for tolerances of +0 microns and -5 microns. Separator stock material may be made flat and wrinkle-free by temporarily laminating the material to a float glass carrier with an appropriate low-volatility liquid. Low-volatility liquids may have advantages over temporary adhesives due to the fragility of the separator membrane and due to the amount of processing time that may be required to release separator membrane from an adhesive layer. Furthermore, in some examples achieving a flat and wrinkle-free separator membrane on float glass using a liquid has been observed to be much more facile than using an adhesive. Prior to lamination, the separator membrane may be made free of particulates. This may be achieved by ultrasonic cleaning of separator membrane to dislodge any surface-adherent particulates. In some examples, handling of a separator membrane may be done in a suitable, low-particle environment such as a laminar flow hood or a cleanroom of at least class 10,000. Furthermore, the float glass substrate may be made to be particulate free by rinsing with an appropriate solvent, ultrasonic cleaning, and/or wiping with clean room wipes.

While a wide variety of low-volatility liquids may be used for the mechanical purpose of laminating microporous polyolefin separator membranes to a float glass carrier, specific requirements may be imposed on the liquid to facilitate subsequent laser cutting of discrete separator shapes. One requirement may be that the liquid has a surface tension low enough to soak into the pores of the separator material which may easily be verified by visual inspection. In some examples, the separator material turns from a white color to a translucent appearance when liquid fills the micropores of the material. It may be desirable to choose a liquid that may be benign and "safe" for workers that may be exposed to the preparation and cutting operations of the separator. It may be desirable to choose a liquid whose vapor pressure may be low enough so that appreciable evaporation does not occur during the time scale of processing (on the order of 1 day). Finally, in some examples the liquid may have sufficient solvating power to dissolve advantageous UV absorbers that may facilitate the laser cutting operation. In an example, it has been observed that a 12 percent (w/w) solution of avobenzone UV absorber in benzyl benzoate solvent may meet the aforementioned requirements and may lend itself to facilitating the laser cutting of polyolefin separators with high precision and tolerance in short order without an excessive number of passes of the cutting laser beam. In some examples, separators may be cut with an 8W 355 nm nanosecond diode-pumped solid state laser using this approach where the laser may have settings for low power attenuation (e.g. 3 percent power), a moderate speed of 1 to 10 mm/s, and only 1 to 3 passes of the laser beam. While this UV-absorbing oily composition has been proven to be an effective laminating and cutting process aid, other oily formulations may be envisaged by those of skill in the art and used without limitation.

In some examples, a separator may be cut while fixed to a float glass. One advantage of laser cutting separators while fixed to a float glass carrier may be that a very high number density of separators may be cut from one separator stock sheet much like semiconductor die may be densely arrayed on a silicon wafer. Such an approach may provide economy of scale and parallel processing advantages inherent in semiconductor processes. Furthermore, the generation of scrap separator membrane may be minimized. Once separators have been cut, the oily process aid fluid may be removed by a series of extraction steps with miscible solvents, the last extraction may be performed with a high-volatility solvent such as isopropyl alcohol in some examples. Discrete separators, once extracted, may be stored indefinitely in any suitable low-particle environment.

As previously mentioned polyolefin separator membranes may be inherently hydrophobic and may need to be made wettable to aqueous surfactants used in the batteries of the present invention. One approach to make the separator membranes wettable may be oxygen plasma treatment. For example, separators may be treated for 1 to 5 minutes in a 100 percent oxygen plasma at a wide variety of power settings and oxygen flow rates. While this approach may improve wettability for a time, it may be well-known that plasma surface modifications provide a transient effect that may not last long enough for robust wetting of electrolyte solutions. Another approach to improve wettability of separator membranes may be to treat the surface by incorporating a suitable surfactant on the membrane. In some cases, the surfactant may be used in conjunction with a hydrophilic polymeric coating that remains within the pores of the separator membrane.

Another approach to provide more permanence to the hydrophilicity imparted by an oxidative plasma treatment may be by subsequent treatment with a suitable hydrophilic organosilane. In this manner, the oxygen plasma may be used to activate and impart functional groups across the entire surface area of the microporous separator. The organosilane may then covalently bond to and/or non-covalently adhere to the plasma treated surface. In examples using an organosilane, the inherent porosity of the microporous separator may not be appreciably changed, monolayer surface coverage may also be possible and desired. Prior art methods incorporating surfactants in conjunction with polymeric coatings may require stringent controls over the actual amount of coating applied to the membrane, and may then be subject to process variability. In extreme cases, pores of the separator may become blocked, thereby adversely affecting utility of the separator during the operation of the electrochemical cell. An exemplary organosilane useful in the present invention may be (3-aminopropyl)triethoxysilane. Other hydrophilic organosilanes may be known to those of skill in the art and may be used without limitation.

Still another method for making separator membranes wettable by aqueous electrolyte may be the incorporation of a suitable surfactant in the electrolyte formulation. One consideration in the choice of surfactant for making separator membranes wettable may be the effect that the surfactant may have on the activity of one or more electrodes within the electrochemical cell, for example, by increasing the electrical impedance of the cell. In some cases, surfactants may have advantageous anti-corrosion properties, specifically in the case of zinc anodes in aqueous electrolytes. Zinc may be an example of a material known to undergo a slow reaction with water to liberate hydrogen gas, which may be undesirable. Numerous surfactants may be known by those of skill in the art to limit rates of said reaction to advantageous levels. In other cases, the surfactant may so strongly interact with the zinc electrode surface that battery performance may be impeded. Consequently, much care may need to be made in the selection of appropriate surfactant types and loading levels to ensure that separator wettability may be obtained without deleteriously affecting electrochemical performance of the cell. In some cases, a plurality of surfactants may be used, one being present to impart wettability to the separator membrane and the other being present to facilitate anti-corrosion properties to the zinc anode. In one example, no hydrophilic treatment is done to the separator membrane and a surfactant or plurality of surfactants is added to the electrolyte formulation in an amount sufficient to effect wettability of the separator membrane.

Discrete separators may be integrated into a tubular microbattery by direct placement into a portion of one or sides of a tube assembly.

### Polymerized Battery Element Separators

In some battery designs, the use of a discrete separator (as described in a previous section) may be precluded due to a variety of reasons such as the cost, the availability of materials, the quality of materials, or the complexity of processing for some material options as non-limiting examples.

A method to achieve a uniform, mechanically robust form-in-place separator may be to use UV-curable hydrogel formulations. Numerous water-permeable hydrogel formulations may be known in various industries, for example, the contact lens industry. An example of a common hydrogel in the contact lens industry may be poly(hydroxyethylmethacrylate) crosslinked gel, or simply pHEMA. For numerous applications of the present invention, pHEMA may possess many attractive properties for use in Leclanché and zinc-carbon batteries. pHEMA typically may maintain a water content of approximately 30-40 percent in the hydrated state while maintaining an elastic modulus of about 100 psi or greater. Furthermore, the modulus and water content properties of crosslinked hydrogels may be adjusted by one of skill in the art by incorporating additional hydrophilic monomeric (e.g. methacrylic acid) or polymeric (e.g. polyvinylpyrrolidone) components. In this manner, the water content, or more specifically, the ionic permeability of the hydrogel may be adjusted by formulation.

Of particular advantage in some examples, a castable and polymerizable hydrogel formulation may contain one or more diluents to facilitate processing. The diluent may be chosen to be volatile such that the castable mixture may be squeegeed into a cavity, and then allowed a sufficient drying time to remove the volatile solvent component. After drying, a bulk photopolymerization may be initiated by exposure to actinic radiation of appropriate wavelength, such as blue UV light at 420 nm, for the chosen photoinitiator, such as CGI 819. The volatile diluent may help to provide a desirable application viscosity so as to facilitate casting a uniform layer of polymerizable material in the cavity. The volatile diluent may also provide beneficial surface tension lowering effects, particularly in the case where strongly polar monomers are incorporated in the formulation. Another aspect that may be important to achieve the casting of a uniform layer of polymerizable material in the cavity may be the application viscosity. Common small molar mass reactive monomers typically do not have very high viscosities, which may be typically only a few centipoise. In an effort to provide beneficial viscosity control of the castable and polymerizable separator material, a high molar mass polymeric component known to be compatible with the polymerizable material may be selected for incorporation into the formulation. Examples of high molar mass polymers which may be suitable for incorporation into exemplary formulations may include polyvinylpyrrolidone and polyethylene oxide.

In some examples the castable, polymerizable separator may be advantageously applied into a designed cavity, as previously described. In alternative examples, there may be no cavity at the time of polymerization. Instead, the castable, polymerizable separator formulation may be coated onto an electrode-containing substrate, for example, patterned zinc plated brass, and then subsequently exposed to actinic radiation using a photomask to selectively polymerize the separator material in targeted areas. Unreacted separator material may then be removed by exposure to appropriate rinsing solvents. In these examples, the separator material may be designated as a photo-patternable separator.

### Multiple Component Separator Formulations

The separator, useful according to examples of the present invention, may have a number of properties that may be important to its function. In some examples, the separator may desirably be formed in such a manner as to create a physical barrier such that layers on either side of the separator do not physically contact one another. The layer may therefore have an important characteristic of uniform thickness, since while a thin layer may be desirable for numerous reasons, a void or gap free layer may be essential. Additionally, the thin layer may desirably have a high permeability to allow for the free flow of ions. Also, the separator requires optimal water uptake to optimize mechanical properties of the separator. Thus, the formulation may contain a crosslinking component, a hydrophilic polymer component, and a solvent component.

A crosslinker may be a monomer with two or more polymerizable double bonds. Suitable crosslinkers may be compounds with two or more polymerizable functional groups. Examples of suitable hydrophilic crosslinkers may also include compounds having two or more polymerizable functional groups, as well as hydrophilic functional groups such as polyether, amide or hydroxyl groups. Specific examples may include TEGDMA (tetraethyleneglycol dimethacrylate), TrEGDMA (triethyleneglycol dimethacrylate), ethyleneglycol dimethacylate (EGDMA), ethylenediamine dimethyacrylamide, glycerol dimethacrylate and combinations thereof.

The amounts of crosslinker that may be used in some examples may range, e.g., from about 0.000415 to about 0.0156 mole per 100 grams of reactive components in the reaction mixture. The amount of hydrophilic crosslinker used may generally be about 0 to about 2 weight percent and, for example, from about 0.5 to about 2 weight percent. Hydrophilic polymer components capable of increasing the viscosity of the reactive mixture and/or increasing the degree of hydrogen bonding with the slow-reacting hydrophilic monomer, such as high molecular weight hydrophilic polymers, may be desirable.

The high molecular weight hydrophilic polymers provide improved wettability, and in some examples may improve wettability to the separator of the present invention. In some non-limiting examples, it may be believed that the high molecular weight hydrophilic polymers are hydrogen bond receivers which in aqueous environments, hydrogen bond to water, thus becoming effectively more hydrophilic. The absence of water may facilitate the incorporation of the hydrophilic polymer in the reaction mixture. Aside from the specifically named high molecular weight hydrophilic polymers, it may be expected that any high molecular weight polymer may be useful in the present invention provided that when said polymer is added to an exemplary silicone hydrogel formulation, the hydrophilic polymer (a) does not substantially phase separate from the reaction mixture and (b) imparts wettability to the resulting cured polymer.

In some examples, the high molecular weight hydrophilic polymer may be soluble in the diluent at processing temperatures. Manufacturing processes which use water or water soluble diluents, such as isopropyl alcohol (IPA), may be desirable examples due to their simplicity and reduced cost. In these examples, high molecular weight hydrophilic polymers which are water soluble at processing temperatures may also be desirable examples.

Examples of high molecular weight hydrophilic polymers may include but are not limited to polyamides, polylactones, polyimides, polylactams and functionalized polyamides, polylactones, polyimides, polylactams, such as PVP and copolymers thereof, or alternatively, DMA functionalized by copolymerizing DMA with a lesser molar amount of a hydroxyl-functional monomer such as HEMA, and then reacting the hydroxyl groups of the resulting copolymer with materials containing radical polymerizable groups. High molecular weight hydrophilic polymers may include but are not limited to poly-N-vinyl pyrrolidone, poly-N-vinyl-2-piperidone, poly-N-vinyl-2-caprolactam, poly-N-vinyl-3-methyl-2-caprolactam, poly-N-vinyl-3-methyl-2-piperidone, poly-N-vinyl-4-methyl-2-piperidone, poly-N-vinyl-4-methyl-2-caprolactam, poly-N-vinyl-3-ethyl-2-pyrrolidone, and poly-N-vinyl-4,5-dimethyl-2-pyrrolidone, polyvinylimidazole, poly-N--N-dimethylacrylamide, polyvinyl alcohol, polyacrylic acid, polyethylene oxide, poly 2 ethyl oxazoline, heparin polysaccharides, polysaccharides, mixtures and copolymers (including block or random, branched, multichain, comb-shaped or star-shaped) thereof where poly-N-vinylpyrrolidone (PVP) may be a desirable example where PVP has been added to a hydrogel composition to form an interpenetrating network which shows a low degree of surface friction and a low dehydration rate.

Additional components or additives, which may generally be known in the art, may also be included. Additives may include but are not limited to ultra-violet absorbing compounds, photo-initiators such as CGI 819, reactive tints, antimicrobial compounds, pigments, photochromic, release agents, combinations thereof and the like.

The method associated with these types of separators may also include receiving CGI 819; and then mixing with PVP, HEMA, EGDMA and IPA; and then curing the resulting mixture with a heat source or an exposure to photons. In some examples the exposure to photons may occur where the photons' energy is consistent with a wavelength occurring in the ultraviolet portion of the electromagnetic spectrum. Other methods of initiating polymerization generally performed in polymerization reactions are within the scope of the present invention.

### Interconnects

Interconnects may allow current to flow to and from the battery in connection with an external circuit. Such interconnects may interface with the environments inside and outside the battery, and may cross the boundary or seal between those environments. These interconnects may be considered as traces, making connections to an external circuit, passing through the battery seal, and then connecting to the current collectors inside the battery. As such, these interconnects may have several requirements. Outside the battery, the interconnects may resemble typical printed circuit traces. They may be soldered to, or otherwise connect to, other traces. In an example where the battery is a separate physical element from a circuit board comprising an integrated circuit, the battery interconnect may allow for connection to the external circuit. This connection may be formed with solder, conductive tape, conductive ink or epoxy, or other means. The interconnect traces may need to survive in the environment outside the battery, for example, not corroding in the presence of oxygen.

As the interconnect passes through the battery seal, it may be of critical importance that the interconnect coexist with the seal and permit sealing. Adhesion may be required between the seal and interconnect in addition to the adhesion which may be required between the seal and battery package. Seal integrity may need to be maintained in the presence of electrolyte and other materials inside the battery. Interconnects, which may typically be metallic, may be known as points of failure in battery packaging. The electrical potential and/or flow of current may increase the tendency for electrolyte to "creep" along the interconnect. Accordingly, an interconnect may need to be engineered to maintain seal integrity.

Inside the battery, the interconnects may interface with the current collectors or may actually form the current collectors. In this regard, the interconnect may need to meet the requirements of the current collectors as described herein, or may need to form an electrical connection to such current collectors.

One class of candidate interconnects and current collectors is metal foils. Such foils are available in thickness of 25 microns or less, which make them suitable for very thin batteries. Such foil may also be sourced with low surface roughness and contamination, two factors which may be critical for battery performance. The foils may include zinc, nickel, brass, copper, titanium, other metals, and various alloys.

### Current Collectors and Electrodes

Many of the current collector and electrode designs are envisioned to be formed by the deposition of metal films upon a sidewall, or by the use of metallic wires as substrates to form the current collectors and electrodes. Examples of these have been illustrated. Nevertheless, there may be some designs that utilize other current collector or electrode designs in a tube battery format.

In some examples of zinc carbon and Leclanche cells, the cathode current collector may be a sintered carbon rod. This type of material may face technical hurdles for thin electrochemical cells of the present invention. In some examples, printed carbon inks may be used in thin electrochemical cells to replace a sintered carbon rod for the cathode current collector, and in these examples, the resulting device may be formed without significant impairment to the resulting electrochemical cell. Typically, said carbon inks may be applied directly to packaging materials which may comprise polymer films, or in some cases metal foils. In the examples where the packaging film may be a metal foil, the carbon ink may need to protect the underlying metal foil from chemical degradation and/or corrosion by the electrolyte. Furthermore, in these examples, the carbon ink current collector may need to provide electrical conductivity from the inside of the electrochemical cell to the outside of the electrochemical cell, implying sealing around or through the carbon ink.

Carbon inks also may be applied in layers that have finite and relatively small thickness, for example, 10 to 20 microns. In a thin electrochemical cell design in which the total internal package thickness may only be about 100 to 150 microns, the thickness of a carbon ink layer may take up a significant fraction of the total internal volume of the electrochemical cell, thereby negatively impacting electrical performance of the cell. Further, the thin nature of the overall battery and the current collector in particular may imply a small cross-sectional area for the current collector. As resistance of a trace increases with trace length and decreases with cross-sectional area, there may be a direct tradeoff between current collector thickness and resistance. The bulk resistivity of carbon ink may be insufficient to meet the resistance requirement of thin batteries. Inks filled with silver or other conductive metals may also be considered to decrease resistance and/or thickness, but they may introduce new challenges such as incompatibility with novel electrolytes. In consideration of these factors, in some examples it may be desirable to realize efficient and high performance thin electrochemical cells of the present invention by utilizing a thin metal foil as the current collector, or to apply a thin metal film to an underlying polymer packaging layer to act as the current collector. Such metal foils may have significantly lower resistivity, thereby allowing them to meet electrical resistance requirements with much less thickness than printed carbon inks.

In some examples, one or more of the tube forms may be used as a substrate for electrodes and current collectors, or as current collectors themselves. In some examples, the metals of a tube form may have depositions made to their surfaces. For example, metal tube pieces may serve as a substrate for a sputtered current collector metal or metal stack. Exemplary metal stacks useful as cathode current collectors may be Ti-W (titanium-tungsten) adhesion layers and Ti (titanium) conductor layers. Exemplary metal stacks useful as anode current collectors may be Ti-W adhesion layers, Au (gold) conductor layers, and In (indium) deposition layers. The thickness of the PVD layers may be less than 500 nm in total. If multiple layers of metals are used, the electrochemical and barrier properties may need to be compatible with the battery. For example, copper may be electroplated on top of a seed layer to grow a thick layer of conductor. Additional layers may be plated upon the copper. However, copper may be electrochemically incompatible with certain electrolytes especially in the presence of zinc. Accordingly, if copper is used as a layer in the battery, it may need to be sufficiently isolated from the battery electrolyte. Alternatively, copper may be excluded or another metal substituted.

Wires made from numerous materials may also be used to form current collectors and/or substrates for electrodes. In some examples, the metal conductor may penetrate an insulator material such as glass or ceramic to provide an isolated electrical current collector contact. In some examples the wire may be made of titanium. In other examples, other base metals including but not limited to Aluminum, Tungsten, Copper, Gold, Silver, Platinum may be used and may have surface films applied.

### Cathode Mixtures and Depositions

There may be numerous cathode chemistry mixtures that may be consistent with the concepts of the present invention. In some examples, a cathode mixture, which may be a term for a chemical formulation used to form a battery's cathode, may be applied as a paste, gel, suspension, or slurry, and may comprise a transition metal oxide such as manganese dioxide, some form of conductive additive which, for example, may be a form of conductive powder such as carbon black or graphite, and a water-soluble polymer such as polyvinylpyrrolidone (PVP) or some other binder additive. In some examples, other components may be included such as one or more of binders, electrolyte salts, corrosion inhibitors, water or other solvents, surfactants, rheology modifiers, and other conductive additives, such as, conductive polymers. Once formulated and appropriately mixed, the cathode mixture may have a desirable rheology that allows it to either be dispensed onto desired portions of the separator and/or cathode current collector, or squeegeed through a screen or stencil in a similar manner. In some examples, the cathode mixture may be dried before being used in later cell assembly steps, while in other examples, the cathode may contain some or all of the electrolyte components, and may only be partially dried to a selected moisture content.

The transition metal oxide may, for example, be manganese dioxide. The manganese dioxide which may be used in the cathode mixture may be, for example, electrolytic manganese dioxide (EMD) due to the beneficial additional specific energy that this type of manganese dioxide provides relative to other forms, such as natural manganese dioxide (NMD) or chemical manganese dioxide (CMD). Furthermore, the EMD useful in batteries of the present invention may need to have a particle size and particle size distribution that may be conducive to the formation of depositable or printable cathode mixture pastes/slurries. Specifically, the EMD may be processed to remove significant large particulate components that may be considered large relative to other features such as battery internal dimensions, separator thicknesses, dispense tip diameters, stencil opening sizes, or screen mesh sizes. Particle size optimization may also be used to improve performance of the battery, for example, internal impedance and discharge capacity.

Milling is the reduction of solid materials from one average particle size to a smaller average particle size, by crushing, grinding, cutting, vibrating, or other processes. Milling may also be used to free useful materials from matrix materials in which they may be embedded, and to concentrate minerals. A mill is a device that breaks solid materials into smaller pieces by grinding, crushing, or cutting. There may be several means for milling and many types of materials processed in them. Such means of milling may include: ball mill, bead mill, mortar and pestle, roller press, and jet mill among other milling alternatives. One example of milling may be jet milling. After the milling, the state of the solid is changed, for example, the particle size, the particle size disposition and the particle shape. Aggregate milling processes may also be used to remove or separate contamination or moisture from aggregate to produce "dry fills" prior to transport or structural filling. Some equipment may combine various techniques to sort a solid material into a mixture of particles whose size is bounded by both a minimum and maximum particle size. Such processing may be referred to as "classifiers" or "classification."

Milling may be one aspect of cathode mixture production for uniform particle size distribution of the cathode mixture ingredients. Uniform particle size in a cathode mixture may assist in viscosity, rheology, electroconductivity, and other properties of a cathode. Milling may assist these properties by controlling agglomeration, or a mass collection, of the cathode mixture ingredients. Agglomeration - the clustering of disparate elements, which in the case of the cathode mixture, may be carbon allotropes and transition metal oxides - may negatively affect the filling process by leaving voids in the desired cathode cavity as illustrated in Fig. 11.

Also, filtration may be another important step for the removal of agglomerated or unwanted particles. Unwanted particles may include over-sized particles, contaminates, or other particles not explicitly accounted for in the preparation process. Filtration may be accomplished by means such as filter-paper filtration, vacuum filtration, chromatography, microfiltration, and other means of filtration.

In some examples, EMD may have an average particle size of 7 microns with a large particle content that may contain particulates up to about 70 microns. In alternative examples, the EMD may be sieved, further milled, or otherwise separated or processed to limit large particulate content to below a certain threshold, for example, 25 microns or smaller.

The cathode may also comprise silver oxides, silver chlorides or nickel oxyhydroxide. Such materials may offer increased capacity and less decrease in loaded voltage during discharge relative to manganese dioxide, both desirable properties in a battery. Batteries based on these cathodes may have current examples present in industry and literature. A novel microbattery utilizing a silver dioxide cathode may include a biocompatible electrolyte, for example, one comprising zinc chloride and/or ammonium chloride instead of potassium hydroxide.

Some examples of the cathode mixture may include a polymeric binder. The binder may serve a number of functions in the cathode mixture. The primary function of the binder may be to create a sufficient inter-particle electrical network between EMD particles and carbon particles. A secondary function of the binder may be to facilitate mechanical adhesion and electrical contact to the cathode current collector. A third function of the binder may be to influence the rheological properties of the cathode mixture for advantageous dispensing and/or stenciling/screening. Still, a fourth function of the binder may be to enhance the electrolyte uptake and distribution within the cathode.

The choice of the binder polymer as well as the amount to be used may be beneficial to the function of the cathode in the electrochemical cell of the present invention. If the binder polymer is too soluble in the electrolyte to be used, then the primary function of the binder - electrical continuity - may be drastically impacted to the point of cell non-functionality. On the contrary, if the binder polymer is insoluble in the electrolyte to be used, portions of EMD may be ionically insulated from the electrolyte, resulting in diminished cell performance such as reduced capacity, lower open circuit voltage, and/or increased internal resistance.

The binder may be hydrophobic; it may also be hydrophilic. Examples of binder polymers useful for the present invention comprise PVP, polyisobutylene (PIB), rubbery triblock copolymers comprising styrene end blocks such as those manufactured by Kraton Polymers, styrene-butadiene latex block copolymers, polyacrylic acid, hydroxyethylcellulose, carboxymethylcellulose, fluorocarbon solids such as polytetrafluoroethylene, cements including Portland cement, among others.

A solvent may be one component of the cathode mixture. A solvent may be useful in wetting the cathode mixture, which may assist in the particle distribution of the mixture. One example of a solvent may be toluene. Also, a surfactant may be useful in wetting, and thus distribution, of the cathode mixture. One example of a surfactant may be a detergent, such as Triton™ QS-44 available from the Dow Chemical Company. Triton™ QS-44 may assist in the dissociation of aggregated ingredients in the cathode mixture, allowing for a more uniform distribution of the cathode mixture ingredients.

A conductive carbon may typically be used in the production of a cathode. Carbon is capable of forming many allotropes, or different structural modifications. Different carbon allotropes have different physical properties allowing for variation in electroconductivity. For example, the "springiness" of carbon black may help with adherence of a cathode mixture to a current collector. However, in energization elements requiring relatively low amounts of energy, these variations in electroconductivity may be less important than other favorable properties such as density, particle size, heat conductivity, and relative uniformity, among other properties. Examples of carbon allotropes include: diamond, graphite, graphene, amorphous carbon (informally called carbon black), buckminsterfullerenes, glassy carbon (also called vitreous carbon), carbon aerogels, and other possible forms of carbon capable of conducting electricity. One example of a carbon allotrope may be graphite.

In some examples the cathode may be deposited upon a tube wall or a wire form cathode collector. Tube walls and wires may be metallic in some examples and may have cathode chemicals such as manganese dioxide electrodeposited upon them. In other examples coatings of electrolytic manganese dioxide may be formed upon cathode collectors.

### Anodes and Anode Corrosion Inhibitors

The anode for the tube battery of the present invention may, for example, comprise zinc. In traditional zinc-carbon batteries, a zinc anode may take the physical form of a can in which the contents of the electrochemical cell may be contained. For the battery of the present invention, a zinc can may be an example but there may be other physical forms of zinc that may prove desirable to realize ultra-small battery designs.

Electroplating of zinc is a process type in numerous industrial uses, for example, for the protective or aesthetic coating of metal parts. In some examples, electroplated zinc may be used to form thin and conformal anodes useful for batteries of the present invention. Furthermore, the electroplated zinc may be patterned in many different configurations, depending on the design intent. A facile means for patterning electroplated zinc may be processing with the use of a photomask or a physical mask. In the case of the photomask, a photoresist may be applied to a conductive substrate, the substrate on which zinc may subsequently be plated. The desired plating pattern may be then projected to the photoresist by means of a photomask, thereby causing curing of selected areas of photoresist. The uncured photoresist may then be removed with appropriate solvent and cleaning techniques. The result may be a patterned area of conductive material that may receive an electroplated zinc treatment. While this method may provide benefit to the shape or design of the zinc to be plated, the approach may require use of available photopatternable materials, which may have constrained properties to the overall cell package construction. Consequently, new and novel methods for patterning zinc may be required to realize some designs of thin microbatteries of the present invention.

The zinc mask may be placed and then electroplating of one or more metallic materials may be performed. In some examples, zinc may be electroplated directly onto an electrochemically compatible anode current collector foil such as brass. In alternate design examples where the anode side packaging comprises a polymer film or multi-layer polymer film upon which seed metallization has been applied, zinc, and/or the plating solutions used for depositing zinc, may not be chemically compatible with the underlying seed metallization. Manifestations of lack of compatibility may include film cracking, corrosion, and/or exacerbated H₂ evolution upon contact with cell electrolyte. In such a case, additional metals may be applied to the seed metal to affect better overall chemical compatibility in the system. One metal that may find particular utility in electrochemical cell constructions may be indium. Indium may be widely used as an alloying agent in battery grade zinc with its primary function being to provide an anti-corrosion property to the zinc in the presence of electrolyte. In some examples, indium may be successfully deposited on various seed metallizations such as Ti-W and Au. Resulting films of 1-3 microns of indium on said seed metallization layers may be low-stress and adherent. In this manner, the anode-side packaging film and attached current collector having an indium top layer may be conformable and durable. In some examples, it may be possible to deposit zinc on an indium-treated surface, the resulting deposit may be very non-uniform and nodular. This effect may occur at lower current density settings, for example, 20 amps per square foot (ASF). As viewed under a microscope, nodules of zinc may be observed to form on the underlying smooth indium deposit. In certain electrochemical cell designs, the vertical space allowance for the zinc anode layer may be up to about 5-10 microns thick, but in some examples, lower current densities may be used for zinc plating, and the resulting nodular growths may grow taller than the desired maximum anode vertical thickness. It may be that the nodular zinc growth stems from a combination of the high overpotential of indium and the presence of an oxide layer of indium.

In some examples, higher current density DC plating may overcome the relatively large nodular growth patterns of zinc on indium surfaces. For example, 100 ASF plating conditions may result in nodular zinc, but the size of the zinc nodules may be drastically reduced compared to 20 ASF plating conditions. Furthermore, the number of nodules may be vastly greater under 100 ASF plating conditions. The resulting zinc film may ultimately coalesce to a more or less uniform layer with only some residual feature of nodular growth while meeting the vertical space allowance of about 5-10 microns.

An added benefit of indium in the electrochemical cell may be reduction of H₂ formation, which may be a slow process that occurs in aqueous electrochemical cells containing zinc. The indium may be beneficially applied to one or more of the anode current collector, the anode itself as a co-plated alloying component, or as a surface coating on the electroplated zinc. For the latter case, indium surface coatings may be desirably applied *in-situ* by way of an electrolyte additive such as indium trichloride or indium acetate. When such additives may be added to the electrolyte in small concentrations, indium may spontaneously plate on exposed zinc surfaces as well as portions of exposed anode current collector.
Zinc and similar anodes commonly used in commercial primary batteries may typically be found in sheet, rod, and paste forms. The anode of a miniature, biocompatible battery may be of similar form, e.g. thin foil, or may be plated as previously mentioned. The properties of this anode may differ significantly from those in existing batteries, for example, because of differences in contaminants or surface finish attributed to machining and plating processes. Accordingly, the electrodes and electrolyte may require special engineering to meet capacity, impedance, and shelf life requirements. For example, special plating process parameters, plating bath composition, surface treatment, and electrolyte composition may be needed to optimize electrode performance.

### Biocompatibility Aspects of Batteries

The batteries according to the present invention may have important aspects relating to safety and biocompatibility. In some examples, batteries for biomedical devices may need to meet requirements above and beyond those for typical usage scenarios. In some examples, design aspects may be considered in relation to stressing events. For example, the safety of an electronic contact lens may need to be considered in the event a user breaks the lens during insertion or removal. In another example, design aspects may consider the potential for a user to be struck in the eye by a foreign object. Still further examples of stressful conditions that may be considered in developing design parameters and constraints may relate to the potential for a user to wear the lens in challenging environments like the environment under water or the environment at high altitude in non-limiting examples.

The safety of such a device may be influenced by: the materials that the device is formed with or from; by the quantities of those materials employed in manufacturing the device; and by the packaging applied to separate the devices from the surrounding on- or in-body environment. In an example, pacemakers may be a typical type of biomedical device which may include a battery and which may be implanted in a user for an extended period of time. In some examples, such pacemakers may typically be packaged with welded, hermetic titanium enclosures, or in other examples, multiple layers of encapsulation. Emerging powered biomedical devices may present new challenges for packaging, especially battery packaging. These new devices may be much smaller than existing biomedical devices, for example, an electronic contact lens or pill camera may be significantly smaller than a pacemaker. In such examples, the volume and area available for packaging may be greatly reduced. An advantage of the limited volume may be that amounts of materials and chemicals may be so small as to inherently limit the exposure potential to a user to a level below a safety limit.

The tube based approach particularly when it include hermetic seals may provide means to enhance biocompatibility. Each of the tube components may provide significant barrier to ingress and egress of materials. Further, with many of the hermetic sealing processes as have been described herein, a battery may be formed that has superior biocompatibility.

### Contact Lens Skirts

In some examples, a preferred encapsulating material that may form an encapsulating layer in a biomedical device may include a silicone containing component. In an example, this encapsulating layer may form a lens skirt of a contact lens. A "silicone-containing component" is one that contains at least one [-Si-O-] unit in a monomer, macromer or prepolymer. Preferably, the total Si and attached O are present in the silicone-containing component in an amount greater than about 20 weight percent, and more preferably greater than 30 weight percent of the total molecular weight of the silicone-containing component. Useful silicone-containing components preferably comprise polymerizable functional groups such as acrylate, methacrylate, acrylamide, methacrylamide, vinyl, N-vinyl lactam, N-vinylamide, and styryl functional groups.

In some examples, the ophthalmic lens skirt, also called an insert-encapsulating layer, that surrounds the insert may be comprised of standard hydrogel ophthalmic lens formulations. Exemplary materials with characteristics that may provide an acceptable match to numerous insert materials may include, the Narafilcon family (including Narafilcon A and Narafilcon B), and the Etafilcon family (including Etafilcon A). A more technically inclusive discussion follows on the nature of materials consistent with the art herein. One ordinarily skilled in the art may recognize that other material other than those discussed may also form an acceptable enclosure or partial enclosure of the sealed and encapsulated inserts and should be considered consistent and included within the scope of the claims.

Suitable silicone containing components include compounds of Formula I 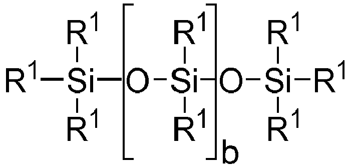 where
R1 is independently selected from monovalent reactive groups, monovalent alkyl groups, or monovalent aryl groups, any of the foregoing which may further comprise functionality selected from hydroxy, amino, oxa, carboxy, alkyl carboxy, alkoxy, amido, carbamate, carbonate, halogen or combinations thereof; and monovalent siloxane chains comprising 1-100 Si-O repeat units which may further comprise functionality selected from alkyl, hydroxy, amino, oxa, carboxy, alkyl carboxy, alkoxy, amido, carbamate, halogen or combinations thereof;
where b = 0 to 500, where it is understood that when b is other than 0, b is a distribution having a mode equal to a stated value;
wherein at least one R1 comprises a monovalent reactive group, and in some examples between one and 3 R1 comprise monovalent reactive groups.

As used herein "monovalent reactive groups" are groups that may undergo free radical and/or cationic polymerization. Non-limiting examples of free radical reactive groups include (meth)acrylates, styryls, vinyls, vinyl ethers, C1-6alkyl(meth)acrylates, (meth)acrylamides, C1-6alkyl(meth)acrylamides, N-vinyllactams, N-vinylamides, C2-12alkenyls, C2-12alkenylphenyls, C2-12alkenylnaphthyls, C2-6alkenylphenylC1-6alkyls, O-vinylcarbamates and O-vinylcarbonates. Non-limiting examples of cationic reactive groups include vinyl ethers or epoxide groups and mixtures thereof In one embodiment the free radical reactive groups comprises (meth)acrylate, acryloxy, (meth)acrylamide, and mixtures thereof.

Suitable monovalent alkyl and aryl groups include unsubstituted monovalent C1 to C16alkyl groups, C6-C14 aryl groups, such as substituted and unsubstituted methyl, ethyl, propyl, butyl, 2-hydroxypropyl, propoxypropyl, polyethyleneoxypropyl, combinations thereof and the like.

In one example, b is zero, one R1 is a monovalent reactive group, and at least 3 R1 are selected from monovalent alkyl groups having one to 16 carbon atoms, and in another example from monovalent alkyl groups having one to 6 carbon atoms. Non-limiting examples of silicone components of this embodiment include 2-methyl-,2-hydroxy-3-[3-[1,3,3,3-tetramethyl-1-[(trimethylsilyl)oxy]disiloxanyl]propoxy]propyl ester ("SiGMA"),
2-hydroxy-3-methacryloxypropyloxypropyl-tris (trimethylsiloxy)silane,
3-methacryloxypropyltris(trimethylsiloxy)silane ("TRIS"),
3-methacryloxypropylbis(trimethylsiloxy)methylsilane and
3-methacryloxypropylpentamethyl disiloxane.

In another example, b is 2 to 20, 3 to 15 or in some examples 3 to 10; at least one terminal R1 comprises a monovalent reactive group and the remaining R1 are selected from monovalent alkyl groups having 1 to 16 carbon atoms, and in another embodiment from monovalent alkyl groups having 1 to 6 carbon atoms. In yet another embodiment, b is 3 to 15, one terminal R1 comprises a monovalent reactive group, the other terminal R1 comprises a monovalent alkyl group having 1 to 6 carbon atoms and the remaining R1 comprise monovalent alkyl group having 1 to 3 carbon atoms. Non-limiting examples of silicone components of this embodiment include (mono-(2-hydroxy-3-methacryloxypropyl)-propyl ether terminated polydimethylsiloxane (400-1000 MW)) ("OH-mPDMS"), monomethacryloxypropyl terminated mono-n-butyl terminated polydimethylsiloxanes (800-1000 MW), ("mPDMS").

In another example, b is 5 to 400 or from 10 to 300, both terminal R1 comprise monovalent reactive groups and the remaining R1 are independently selected from monovalent alkyl groups having 1 to 18 carbon atoms, which may have ether linkages between carbon atoms and may further comprise halogen.

In one example, where a silicone hydrogel lens is desired, the lens of the present invention may be made from a reactive mixture comprising at least about 20 and preferably between about 20 and 70%wt silicone containing components based on total weight of reactive monomer components from which the polymer is made.

In another embodiment, one to four R1 comprises a vinyl carbonate or carbamate of the formula: 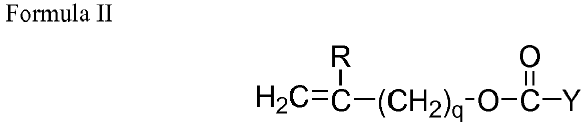
wherein: Y denotes O-, S- or NH-;
R denotes, hydrogen or methyl; d is 1, 2, 3 or 4; and q is 0 or 1.

The silicone-containing vinyl carbonate or vinyl carbamate monomers specifically include: 1,3-bis[4-(vinyloxycarbonyloxy)but-1-yl]tetramethyl-disiloxane; 3-(vinyloxycarbonylthio) propyl-[tris (trimethylsiloxy)silane]; 3-[tris(trimethylsiloxy)silyl] propyl allyl carbamate; 3-[tris(trimethylsiloxy)silyl] propyl vinyl carbamate; trimethylsilylethyl vinyl carbonate; trimethylsilylmethyl vinyl carbonate, and

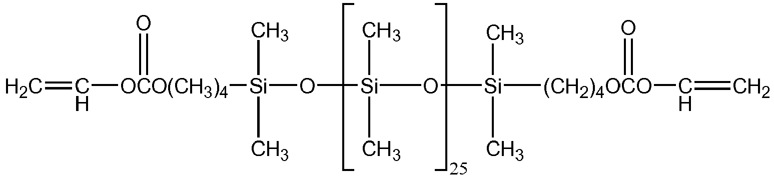

Where biomedical devices with modulus below about 200 are desired, only one R1 shall comprise a monovalent reactive group and no more than two of the remaining R1 groups may comprise monovalent siloxane groups.

Another class of silicone-containing components includes polyurethane macromers of the following formulae:

Formulae IV-VI (*D*A*D*G)a *D*D*E1; E(*D*G*D*A)a *D*G*D*E1 or; E(*D*A*D*G)a *D*A*D*E1

wherein:
D denotes an alkyl diradical, an alkyl cycloalkyl diradical, a cycloalkyl diradical, an aryl diradical or an alkylaryl diradical having 6 to 30 carbon atoms,
G denotes an alkyl diradical, a cycloalkyl diradical, an alkyl cycloalkyl diradical, an aryl diradical or an alkylaryl diradical having 1 to 40 carbon atoms and which may contain ether, thio or amine linkages in the main chain;
* denotes a urethane or ureido linkage;
a is at least 1;

A denotes a divalent polymeric radical of formula:

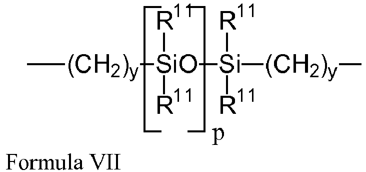

R11 independently denotes an alkyl or fluoro-substituted alkyl group having 1 to 10 carbon atoms, which may contain ether linkages between carbon atoms; y is at least 1; and p provides a moiety weight of 400 to 10,000; each of E and E1 independently denotes a polymerizable unsaturated organic radical represented by formula: 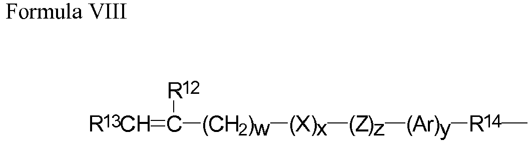 wherein: R12 is hydrogen or methyl; R13 is hydrogen, an alkyl radical having 1 to 6 carbon atoms, or a -CO-Y-R15 radical wherein Y is -O-,Y-S- or -NH-; R14 is a divalent radical having 1 to 12 carbon atoms; X denotes -CO- or -OCO-; Z denotes -O- or NH-; Ar denotes an aromatic radical having 6 to 30 carbon atoms; w is 0 to 6; x is 0 or 1; y is 0 or 1; and z is 0 or 1.

A preferred silicone-containing component is a polyurethane macromer represented by the following formula: 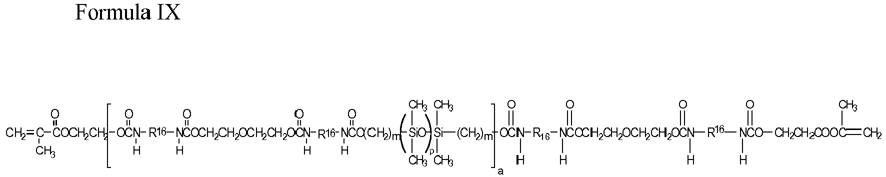 wherein R16 is a diradical of a diisocyanate after removal of the isocyanate group, such as the diradical of isophorone diisocyanate. Another suitable silicone containing macromer is compound of formula X (in which x + y is a number in the range of 10 to 30) formed by the reaction of fluoroether, hydroxy-terminatedpolydimethylsiloxane, isophorone diisocyanate and isocyanatoethylmethacrylate.

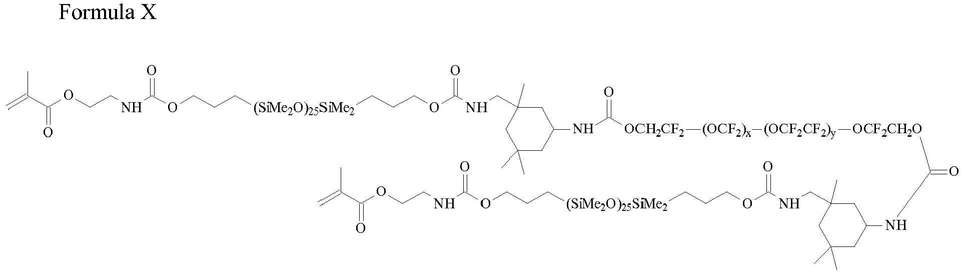

Other silicone containing components suitable for use in this invention include macromers containing polysiloxane, polyalkylene ether, diisocyanate, polyfluorinated hydrocarbon, polyfluorinated ether and polysaccharide groups; polysiloxanes with a polar fluorinated graft or side group having a hydrogen atom attached to a terminal difluoro-substituted carbon atom; hydrophilic siloxanyl methacrylates containing ether and siloxanyl linkanges and crosslinkable monomers containing polyether and polysiloxanyl groups. In some examples, the polymer backbone may have zwitterions incorporated into it. These zwitterions may exhibit charges of both polarity along the polymer chain when the material is in the presence of a solvent. The presence of the zwitterions may improve wettability of the polymerized material. In some examples, any of the foregoing polysiloxanes may also be used as an encapsulating layer in the present invention.

The biocompatible batteries may be used in biocompatible devices such as, for example, implantable electronic devices, such as pacemakers and micro-energy harvesters, electronic pills for monitoring and/or testing a biological function, surgical devices with active components, ophthalmic devices, microsized pumps, defibrillators, stents, and the like.

Specific examples have been described to illustrate sample embodiments for the cathode mixture for use in biocompatible batteries. These examples are for said illustration and are not intended to limit the scope of the claims in any manner. Accordingly, the description is intended to embrace all examples that may be apparent to those skilled in the art.

## Claims

1. A biomedical device comprising:
an electroactive component;
a battery comprising:
an anode current collector;
a cathode current collector;
an anode extending along an arcuate path;
a generally planar cathode extending along the arcuate path, wherein the anode is positioned above the cathode;
a separator positioned between the anode and the cathode, wherein the separator extends along the arcuate path;
an electrolyte positioned generally surrounding the anode, the cathode and the separator to provide ionic conductivity between the anode and the cathode;
flexible packaging generally surrounding the anode, the cathode, the cathode current collector, the separator, and the electrolyte, wherein the anode collector extends through the flexible packaging along a first vector along the arcuate path, and the cathode collector extends through the flexible packaging along a second vector along the arcuate path;
an encapsulating copper layer surrounding the flexible packaging, wherein one of the anode collector or the cathode collector is not surrounded by the encapsulating copper, and wherein at least a portion of the copper layer is deposited to the flexible packaging with electroless plating; and
a hydrogel layer, wherein the hydrogel layer stores water and wherein the water of the hydrogel layers may diffuse to cathode and separator layers within the battery; and
a first biocompatible encapsulating layer, wherein the first biocompatible encapsulating layer encapsulates at least the electroactive component and the battery.

2. A method of manufacturing a micro-battery comprising:
obtaining a cathode collector;
attaching a cathode to the cathode collector with a conductive adhesive;
obtaining an anode collector;
obtaining an anode;
stacking the cathode collector, the cathode, the anode, the anode collector, and a separator, wherein the separator lies between the cathode and the anode;
surrounding the stack with a first and second flexible plastic sheet;
welding the first and second flexible plastic sheets to each other with a first ultrasonic weld, wherein the first ultrasonic weld surrounds the stack along a first portion of two sides, wherein a second portion of the two sides comprises a fill port for the micro-battery;
filling an electrolyte within the fill port;
welding the second portion of the two sides of the first and second flexible plastic sheets, wherein the welding of the second portion seals the fill port;
depositing an electroless plated layer of copper along a portion of the micro-battery; and
depositing a hydrogel layer adjacent to one or more of the cathode and the separator.
